# EUROPEAN PATENT APPLICATION

(11) **EP 4 797 603 A1**
(43) Date of publication of application: **26.08.2026**
(21) Application number: 24884381.5
(22) Date of filing: 10.10.2024
(51) Int. Cl.: H04L 5/00

(54) **PROTOCOL DATA UNIT SET-BASED COMMUNICATION METHOD AND RELATED APPARATUS**

(30) Priority: 03.11.2023 CN 202311461262
(71) Applicant: HUAWEI TECHNOLOGIES CO., LTD., Shenzhen, Guangdong 518129 (CN)
(72) Inventor: ZANG, Xin, Shenzhen, Guangdong 518129 (CN); MA, Jingwang, Shenzhen, Guangdong 518129 (CN); ZHOU, Yu, Shenzhen, Guangdong 518129 (CN)
(74) Representative: Goddar, Heinz J.
(86) International application number: PCT/CN2024/123852
(87) International publication number: WO 2025/092377

(57) **Abstract**

This application discloses a protocol data unit set-based communication method and a related apparatus. The method includes: sending first information, where the first information indicates that a plurality of data packets belonging to a same protocol data unit set PDU set are transmitted in at least two quality of service QoS flows; and sending the plurality of data packets belonging to the same PDU set, where the plurality of data packets belonging to the same PDU set are transmitted via the at least two QoS flows. Thus, different QoS requirements of different data packets in the same PDU set are satisfied. For example, if data carried by the same PDU set is data of a 3D media frame, splitting transmission of geometric data and attribute data in the 3D media frame can be implemented by using the first information. In this way, service requirements of a plurality of services are satisfied, data transmission quality is improved, and user experience is enhanced.

## Description

This application claims priority to Chinese Patent Application No. CN202311461262.3, filed with the China National Intellectual Property Administration on November 3, 2023 and entitled "PROTOCOL DATA UNIT SET-BASED COMMUNICATION METHOD AND RELATED APPARATUS", which is incorporated herein by reference in its entirety.

### TECHNICAL FIELD

This application relates to the field of communication technologies, and in particular, to a protocol data unit set-based communication method and a related apparatus.

### BACKGROUND

With development of 5th generation (5th generation, 5G) mobile communication technologies, media services increase exponentially. The media services, such as high-definition video services and extended reality (extended reality, XR) services, impose high requirements on a network transmission bandwidth and a network transmission delay. Currently, a concept of a protocol data unit (protocol data unit, PDU) set (PDU SET) is proposed. The PDU set includes one or more data packets carrying an application layer payload. The data packet is, for example, a PDU, and the application layer payload is a media frame, a video frame, or a video segment.

For a common media service, for example, a two-dimensional (two-dimensional, 2D) media frame (or a 2D frame for short), importance and quality of service (quality of service, QoS) requirements of a plurality of data packets included in one 2D frame are usually the same, and importance or QoS requirements of different 2D frames of a same service flow (or a same data flow) may be different. Therefore, a plurality of data packets included in one 2D frame are usually transmitted in one QoS flow (QoS flow), and data of different 2D frames may be transmitted in different QoS flows.

With development of media services, a new media service represented by a three-dimensional (three-dimensional, 3D) media service emerges. Data related to the 3D media service (for example, 3D media frame data or 3D point cloud data) may be classified in a plurality of manners based on different coding schemes. For example, in 3D multiview video coding (multiview video coding, MVC), data is classified based on a view. A 3D media frame of a single view includes a data packet corresponding to a left eye and a data packet corresponding to a right eye. For another example, in a 3D mesh (mesh), 3D point cloud data is classified into attribute data and geometric data. A geometric data flow carries geometric coordinates of each point in the 3D point cloud data (point cloud data), and an attribute data flow carries information such as a color, a reflectivity, and a normal vector of each point in the point cloud data. Different data packets in a same media frame may have different importance or different QoS requirements. Correspondingly, a plurality of data packets included in one PDU set that carries the media frame may have different importance or different QoS requirements. Therefore, a new requirement is imposed on a transmission mechanism of the PDU set.

### SUMMARY

According to a first aspect, an embodiment of this application provides a protocol data unit set-based communication method. The method is applied to an application function AF network element, a third-party server (application server, AS), or a combination of an AF and an AS. For example, a sender of first information is the AF, and a sender of a data packet is the AS. The following uses an example in which the method is applied to the application function AF network element. It should be noted that the method provided in the first aspect may be further applied to another network function, network element, or software module that can implement a function of an application function, and the method includes the following.

In a possible implementation, the application function sends first information, where the first information indicates that a plurality of data packets belonging to a same protocol data unit set PDU set are transmitted in at least two quality of service QoS flows; and the application function sends the plurality of data packets belonging to the same PDU set, where the plurality of data packets belonging to the same PDU set are transmitted via the at least two QoS flows.

Optionally, the first information is protocol description (protocol description) information.

In another possible implementation, the application function sends first information, where the first information indicates that a plurality of data packets belonging to a same data flow are transmitted in at least two quality of service QoS flows; and the application function sends the plurality of data packets belonging to the same data flow, where the plurality of data packets belonging to the same data flow are transmitted via the at least two QoS flows.

In this application, "the plurality of data packets of the same data flow" or "the plurality of data packets of the same PDU set" indicate a representation form of data packets that need to be transmitted in a splitting manner. In other words, the plurality of data packets may be transmitted in the same data flow, or may be transmitted in the same PDU set. "The plurality of data packets transmitted in the same data flow" and "the plurality of data packets transmitted in the same PDU set" are similar, and mean that the plurality of data packets have a same identity. For example, the identity may be information such as an internet protocol IP 3-tuple, 5-tuple, or 7-tuple. The IP 3-tuple includes a source port information, a source IP address, and a protocol type. The IP 5-tuple includes a destination IP address, a destination port information, a source IP address, a source port information, and a protocol type. The IP 7-tuple includes a source IP address, a destination IP address, a source port information, a destination port information, transport layer protocol information, a queue pair (queue pair, QP), a service type, and a port index.

In another possible implementation, the application function sends a plurality of data packets belonging to a same PDU set, where the plurality of data packets belonging to the same PDU set carry first information, the first information indicates that the plurality of data packets belonging to the same protocol data unit set PDU set are transmitted in at least two quality of service QoS flows, and the plurality of data packets belonging to the same PDU set are transmitted via the at least two QoS flows.

It should be noted that the data packet in this embodiment of this application may be a protocol data unit (PDU), or may be a service data unit (SDU), for example, a service data adaptation protocol (SDAP) SDU, a packet data convergence protocol (PDCP) SDU, a radio link control (RLC) SDU, or a medium access control (MAC) SDU. It may be understood that, for a data packet sent from a user plane function (UPF) to an access network device, the data packet may be in a format of a protocol data unit. When the access network device receives the data packet from an SDAP layer, the data packet may change a format of an SDAP SDU. When the data packet is transmitted from the SDAP layer to a PDCP layer, the data packet is converted into a PDCP SDU upon arrival at the PDCP layer. Similarly, after the data packet arrives at an RLC layer, the data packet is converted into an RLC SDU. After the data packet arrives at a MAC layer, the data packet is converted into a MAC SDU. A data unit at a data packet granularity processed at each layer may be different. It may be understood that the data packet in this embodiment of this application may alternatively be a data unit at another granularity. This is not limited in this embodiment of this application.

In this embodiment of this application, the application function sends the first information, so that the plurality of data packets in the same PDU set are transmitted in the at least two QoS flows in a splitting manner. The first information indicates that the plurality of data packets belonging to the same protocol data unit set PDU set are transmitted in the at least two quality of service QoS flows, to satisfy different QoS requirements of different data packets in the same PDU set. For example, if data carried by the same PDU set is data of a 3D media frame, splitting transmission of geometric data and attribute data in the 3D media frame can be implemented by using the first information. For another example, splitting transmission of left-eye video data and right-eye video data in a 3D media frame can be implemented by using the first information. For another example, splitting transmission of video data of different views in a 3D media frame can be implemented by using the first information. In this way, service requirements of a plurality of services are satisfied, data transmission quality is improved, and user experience is enhanced.

With reference to the first aspect, in a possible implementation of the first aspect, the application function sends second information, where the second information indicates a splitting transmission mechanism of the plurality of data packets belonging to the same PDU set. For example, the second information may be data flow description information or a data packet detection rule. The plurality of data packets in the same protocol data unit set PDU set have at least two types of data flow description information or data packet detection rules. The second information may indicate that the plurality of data packets in the same protocol data unit set PDU set are transmitted in at least two quality of service QoS flows when being transmitted in a 5G network.

With reference to the first aspect, in a possible implementation of the first aspect, the first information includes any one or more of importance information, priority information, transmission delay information, and packet error rate information of each of the plurality of data packets belonging to the same PDU set. The importance information is used as an example. Importance information of all of the plurality of data packets belonging to the same PDU set is in one-to-one correspondence with different QoS flows for carrying the data packets belonging to the same PDU set. For example, the importance information includes a field, a bit, or a value, the field, the bit, or the value included in the importance information explicitly indicates importance of the data packet associated with the importance information, and the information may be carried in a data packet header. For example, importance information of a data packet #1 is "low", indicating that importance of the data packet #1 is low; and importance information of a data packet #2 is "high", indicating that importance of the data packet #2 is high. For another example, importance information of a data packet #1 is "0", indicating that importance of the data packet #1 is low; and importance information of a data packet #2 is "1", indicating that importance of the data packet #2 is high. The importance information of the data packet indicates the QoS flow for carrying the data packet, thereby improving implementation flexibility of the solution. Information other than the importance information may also be indicated in a representation form of the importance information.

With reference to the first aspect, in a possible implementation of the first aspect, each of the plurality of data packets belonging to the same PDU set carries the importance information of the data packet. The data packet may carry the importance information of the data packet, so that the plurality of data packets in the same PDU set are transmitted in at least two QoS flows in a splitting manner in a case of relatively low signaling overheads.

With reference to the first aspect, in a possible implementation of the first aspect, the importance information of the data packet is represented by a coding scheme of the data packet, and importance of the data packet is determined by using the coding scheme of the data packet. Alternatively, the importance information of the data packet is represented by a data type of the data packet, and importance of the data packet is determined by using the data type of the data packet. The importance information may be represented by the coding scheme of the data packet, or the importance information may be represented by the data type of the data packet. The importance of the data packet is indicated in a plurality of manners, thereby improving implementation flexibility of the solution.

With reference to the first aspect, in a possible implementation of the first aspect, the plurality of data packets belonging to the same PDU set belong to different sub-PDU sets, the first information further includes an identity of a sub-PDU set to which each of the plurality of data packets belonging to the same PDU set belongs, and each sub-PDU set includes at least one data packet. The sub-PDU set provided in this embodiment of this application is a subset of the PDU set, the sub-PDU set includes at least one data packet, the data packet included in the sub-PDU set belongs to the PDU set, and the PDU set includes a plurality of sub-PDU sets. The sub-PDU set may also be referred to as a PDU set subset or another name. For example, if the PDU set is referred to as a media frame, a video frame, a data frame, or a frame, the plurality of sub-PDU sets included in the PDU set are referred to as sub-media frames, sub-video frames, sub-data frames, or subframes. This is not limited in this embodiment of this application.

With reference to the first aspect, in a possible implementation of the first aspect, the first information includes an association relationship between sub-PDU sets to which the data packets belonging to the same PDU set belong and QoS flows for carrying the sub-PDU sets. For example, a first PDU set is used as an example for description. The first PDU set includes a first sub-PDU set, a second sub-PDU set, and a third sub-PDU set. The association relationship between the sub-PDU sets to which the data packets belong and the QoS flows for carrying the sub-PDU sets includes: A QoS flow for carrying a data packet of the first sub-PDU set is a QoS flow #1, a QoS flow for carrying a data packet of the second sub-PDU set is a QoS flow #2, and a QoS flow for carrying a data packet of the third sub-PDU set is a QoS flow #3. It may be determined, based on the first information (the association relationship between the sub-PDU sets to which the data packets belonging to the same PDU set belong and the QoS flows for carrying the sub-PDU sets), that a data packet #1 is transmitted in the QoS flow #1. A specific implementation may be that a UPF maps, according to a data packet detection rule corresponding to the first sub-PDU set, the data packet corresponding to the first sub-PDU set to the QoS flow #1 for transmission. Implementations of the second and third sub-PDU sets are similar to that of the first sub-PDU set.

With reference to the first aspect, in a possible implementation of the first aspect, that the application function sends the first information includes: The application function sends the data packets belonging to the same PDU set, where the data packet carries the first information. The first information carried in the data packet is associated with the data packet. For example, the first information is importance information, and the first information carried in the data packet is importance information of the data packet. The first information is carried in the data packet, so that signaling overheads are reduced.

With reference to the first aspect, in a possible implementation of the first aspect, a real-time transport protocol RTP packet header of the data packet carries the first information, or a GTP-U packet header of the data packet carries the first information.

With reference to the first aspect, in a possible implementation of the first aspect, a type field of a network abstraction layer packet header NAL header of the data packet belonging to the same PDU set carries the first information.

According to a second aspect, an embodiment of this application provides a protocol data unit set-based communication method. The method is applied to a user plane function UPF. It should be noted that the method provided in the second aspect may be further applied to another network function, network element, or software module that can implement a function of the user plane function. The method includes:
receiving a plurality of data packets belonging to a same PDU set; and determining, based on first information and/or second information, a QoS flow for carrying the data packet, where the first information indicates that the plurality of data packets belonging to the same PDU set are transmitted in at least two quality of service QoS flows, and the second information indicates a splitting transmission mechanism of the plurality of data packets belonging to the same PDU set.

In another possible implementation, a plurality of data packets belonging to a same data flow are received, where the plurality of data packets belonging to the same data flow are transmitted via at least two QoS flows; and a QoS flow for carrying the data packet is determined based on first information and/or second information, where the first information indicates that the plurality of data packets of the same data flow are transmitted in the at least two quality of service QoS flows, and the second information indicates a splitting transmission mechanism of the plurality of data packets belonging to the same data flow.

Optionally, the user plane function obtains the first information from the data packet.

Optionally, the user plane function obtains the second information from an application function. For example, the second information may be data flow description information or a data packet detection rule. The plurality of data packets in the same protocol data unit set PDU set have at least two types of data flow description information or data packet detection rules. The second information may indicate that the plurality of data packets in the same protocol data unit set PDU set are transmitted in at least two quality of service QoS flows when being transmitted in a 5G network.

Optionally, the user plane function obtains the second information from a session management function SMF.

In this embodiment of this application, after receiving the plurality of data packets belonging to the same PDU set, the UPF determines, based on the first information and/or the second information, that the plurality of data packets belonging to the same PDU set are transmitted in the at least two quality of service QoS flows. Thus, different QoS requirements of different data packets in the same PDU set are satisfied, data transmission quality is improved, and user experience is enhanced.

With reference to the second aspect, in a possible implementation of the second aspect, the first information includes importance information of each of the plurality of data packets belonging to the same PDU set, and importance information of all of the plurality of data packets belonging to the same PDU set is in one-to-one correspondence with different QoS flows for carrying the data packets belonging to the same PDU set; the second information includes an association relationship between the importance information of the data packet and the QoS flow; and determining, based on the first information and/or the second information, the QoS flow for carrying the data packet includes: determining, based on the importance information of each of the plurality of data packets belonging to the same PDU set and/or the association relationship between the importance information of the data packet and the QoS flow, the QoS flow associated with the importance information of the data packet, where the QoS flow is used to carry the data packet.

In an example, the user plane function determines importance of a data packet based on importance information of the data packet, and then determines, based on the importance, a QoS flow corresponding to the data packet. For example, in the same PDU set, a QoS flow with a higher priority is used for a data packet with higher importance, and a QoS flow with a lower priority is used for a data packet with lower importance. For another example, in the same PDU set, a QoS flow with a higher priority is used for a data packet carrying geometric data, and a QoS flow with a lower priority is used for a data packet carrying attribute data.

In another example, the user plane function determines, based on an association relationship between a sub-PDU set to which a data packet belongs and a QoS flow for carrying the sub-PDU set, a QoS flow corresponding to the data packet. For example, after determining, based on the first information related to the data packet, the sub-PDU set to which the data packet belongs, the user plane function determines, based on the association relationship, the QoS flow for carrying the sub-PDU set. Then, the QoS flow is determined as the QoS flow for carrying the data packet.

Optionally, the importance information may be replaced with other information, including but not limited to priority information, transmission delay information, packet error rate information, packet loss rate information, or the like.

In this embodiment of this application, the user plane function may determine, in a plurality of manners, the QoS flow for carrying the data packet, so that the plurality of data packets of the same PDU set are transmitted in the at least two QoS flows, thereby improving implementation flexibility of the solution.

With reference to the second aspect, in a possible implementation of the second aspect, the importance information of the data packet is represented by a coding scheme of the data packet, and importance of the data packet is determined by using the coding scheme of the data packet. Alternatively, the importance information of the data packet is represented by a data type of the data packet, and importance of the data packet is determined by using the data type of the data packet. The importance information may be represented by the coding scheme of the data packet, or the importance information may be represented by the data type of the data packet. The importance of the data packet is indicated in a plurality of manners, thereby improving implementation flexibility of the solution.

With reference to the second aspect, in a possible implementation of the second aspect, each of the plurality of data packets belonging to the same PDU set carries the importance information of the data packet. The data packet may carry the importance information of the data packet, so that the plurality of data packets in the same PDU set are transmitted in at least two QoS flows in a splitting manner in a case of relatively low signaling overheads.

With reference to the second aspect, in a possible implementation of the second aspect, determining, based on the first information and/or the second information, the QoS flow for carrying the data packet includes: determining, based on the first information and/or the second information, a sub-PDU set to which the data packet belongs, where the plurality of data packets belonging to the same PDU set belong to different sub-PDU sets, and each sub-PDU set includes at least one data packet; and determining, based on the sub-PDU set to which the data packet belongs, a QoS flow corresponding to the sub-PDU set, where the QoS flow is used to carry the data packet.

Specifically, after the sub-PDU set to which the data packet belongs is determined based on the first information (for example, information about the sub-PDU set), the QoS flow for carrying the sub-PDU set is determined based on the second information. Then, the QoS flow is selected as the QoS flow for carrying the data packet. For example, after the sub-PDU set to which the data packet belongs is determined, the QoS flow, a QoS parameter, or a QoS requirement corresponding to the sub-PDU set is determined based on the second information. Then, the QoS flow for carrying the data packet is determined based on the QoS flow, the QoS parameter, or the QoS requirement corresponding to the sub-PDU set. In this embodiment of this application, the user plane function may determine, in a plurality of manners, the QoS flow for carrying the data packet, so that the plurality of data packets of the same PDU set are transmitted in the at least two QoS flows, thereby improving implementation flexibility of the solution.

With reference to the second aspect, in a possible implementation of the second aspect, the second information includes a data packet detection rule for the plurality of sub-PDU sets belonging to the same PDU set; and determining, based on the first information and/or the second information, the sub-PDU set to which the data packet belonging to the same PDU set belongs includes: performing detection on data of the data packet according to the data packet detection rule for the plurality of sub-PDU sets belonging to the same PDU set, to determine the sub-PDU set to which the data packet belongs. Specifically, detection is performed on the data of the data packet according to the data packet detection rule for the plurality of sub-PDU sets belonging to the same PDU set, to determine the sub-PDU set to which the data packet belongs. Then, a QoS flow for carrying the sub-PDU set is determined based on the sub-PDU set to which the data packet belongs. Then, the QoS flow is used as the QoS flow for carrying the data packet. In this embodiment of this application, the user plane function may determine, in a plurality of manners, the QoS flow for carrying the data packet, so that the plurality of data packets of the same PDU set are transmitted in the at least two QoS flows, thereby improving implementation flexibility of the solution.

With reference to the second aspect, in a possible implementation of the second aspect, the first information includes an association relationship between sub-PDU sets to which the data packets belonging to the same PDU set belong and quality of service QoS flows for carrying the sub-PDU sets; and determining, based on the first information and/or the second information, the QoS flow for carrying the data packet includes: determining, based on the association relationship between the sub-PDU sets to which the data packets belong and the QoS flows for carrying the sub-PDU sets, the QoS flow corresponding to the data packet, where the QoS flow is used to carry the data packet. Specifically, the user plane function determines, based on an association relationship between a sub-PDU set to which a data packet belongs and a QoS flow for carrying the sub-PDU set, a QoS flow corresponding to the data packet. For example, after determining, based on the first information related to the data packet, the sub-PDU set to which the data packet belongs, the user plane function determines, based on the association relationship, the QoS flow for carrying the sub-PDU set. Then, the QoS flow is determined as the QoS flow for carrying the data packet. In this embodiment of this application, the user plane function may determine, in a plurality of manners, the QoS flow for carrying the data packet, so that the plurality of data packets of the same PDU set are transmitted in the at least two QoS flows, thereby improving implementation flexibility of the solution.

With reference to the second aspect, in a possible implementation of the second aspect, the method further includes: obtaining, based on the data packet and the first information, a data packet including the first information; and mapping the data packet including the first information to the QoS flow for transmission. The first information related to the data packet is transmitted to an access network device along with a flow, thereby reducing signaling overheads.

With reference to the second aspect, in a possible implementation of the second aspect, obtaining, based on the data packet and the first information, the data packet including the first information includes: adding the first information to a GTP-U packet header of the data packet, to obtain the data packet including the first information.

According to a third aspect, an embodiment of this application provides a protocol data unit set-based communication method. The method is applied to an access network device RAN. It should be noted that the method provided in the third aspect may be further applied to another device or hardware or software module that can implement a function of the access network device. The method includes:
receiving a plurality of data packets belonging to a same protocol data unit set PDU set; determining, based on first information and/or second information, a data radio bearer DRB for carrying the data packet, where the first information indicates that the plurality of data packets belonging to the same PDU set are transmitted in at least two quality of service QoS flows, and the second information indicates a splitting transmission mechanism of the plurality of data packets belonging to the same PDU set; and mapping the data packet to the determined DRB for carrying the data packet.

In another possible implementation, a plurality of data packets belonging to a same data flow are received, where the plurality of data packets belonging to the same data flow are transmitted via at least two QoS flows; and a data radio bearer for carrying the data packet is determined based on first information and/or second information, where the first information indicates that the plurality of data packets of the same data flow are transmitted in the at least two quality of service QoS flows, and the second information indicates a splitting transmission mechanism of the plurality of data packets belonging to the same data flow. In this embodiment of this application, after receiving the plurality of data packets belonging to the same PDU set, the RAN determines, based on the first information and/or the second information, that the plurality of data packets belonging to the same PDU set are transmitted in the at least two quality of service QoS flows, and then maps the plurality of data packets belonging to the same PDU set to a corresponding DRB for transmission to a terminal device. The plurality of data packets belonging to the same PDU set may be mapped to at least one DRB. According to the foregoing method, different QoS requirements of different data packets in the same PDU set are satisfied, data transmission quality is improved, and user experience is enhanced.

With reference to the third aspect, in a possible implementation of the third aspect, determining, based on the first information and/or the second information, the data radio bearer DRB for carrying the data packet includes: determining, based on the first information and/or the second information, a sub-PDU set to which the data packet belongs, where the plurality of data packets belonging to the same PDU set belong to different sub-PDU sets, and each sub-PDU set includes at least one data packet; and determining, based on the sub-PDU set to which the data packet belongs, the DRB corresponding to the sub-PDU set, where the DRB is used to carry the data packet.

Specifically, after receiving a data packet from a user plane function, the access network device determines, based on first information (for example, first information carried in the data packet) and/or second information corresponding to the data packet, a sub-PDU set to which the data packet belongs. Then, a DRB corresponding to the sub-PDU set is determined based on the sub-PDU set to which the data packet belongs. The access network device maps the data packet to the DRB for transmission. The access network device determines, based on the sub-PDU set to which the data packet belongs, the DRB for transmitting the data packet, thereby implementing, in a plurality of manners, splitting transmission of the plurality of data packets of the same PDU set in at least one DRB, so that different QoS requirements of different data packets in the same PDU set are satisfied, data transmission quality is improved, and user experience is enhanced.

With reference to the third aspect, in a possible implementation of the third aspect, determining the corresponding DRB based on the sub-PDU set of the data packet belonging to the same PDU set includes: determining, based on a QoS parameter of the sub-PDU set, the DRB that satisfies a requirement of the QoS parameter of the sub-PDU set.

Specifically, the QoS parameter corresponding to the sub-PDU set (for example, a QoS profile (profile) obtained from an SMF, where the QoS profile includes the QoS parameter corresponding to the sub-PDU set) is determined based on the second information. Then, the DRB that satisfies the requirement of the QoS parameter is determined based on the QoS parameter, and the DRB is determined as the DRB for carrying the data packet.

With reference to the third aspect, in a possible implementation of the third aspect, the QoS parameter of the sub-PDU set includes any one or more of the following: a sub-PDU set delay budget sub-PDU set delay budget, a sub-PDU set error rate sub-PDU set error rate, or sub-PDU set integrated handling information sub-PDU set integrated handling information.

With reference to the third aspect, in a possible implementation of the third aspect, the method further includes: determining a retransmission mechanism of the data packet based on the first information and/or the second information. Specifically, the retransmission mechanism may indicate which data packets in the same PDU set need to be retransmitted when a packet loss occurs, and which data packets do not need to be retransmitted when the packet loss occurs. The retransmission mechanism may further indicate a quantity of times of retransmitting specific data packets in the same PDU set when the packet loss occurs. In this way, service requirements of a plurality of services are satisfied, data transmission quality is improved, and user experience is enhanced.

With reference to the third aspect, in a possible implementation of the third aspect, determining the retransmission mechanism of the data packet based on the first information and/or the second information includes: determining, based on the first information and/or the second information, a sub-PDU set to which the data packet belongs; and determining the retransmission mechanism of the data packet based on the sub-PDU set.

Optionally, the access network device may alternatively determine the retransmission mechanism of the data packet based on the importance information of the data packet. In this embodiment of this application, the access network device determines the retransmission mechanism of the data packet by using a plurality of methods, thereby improving implementation flexibility of the solution.

With reference to the third aspect, in a possible implementation of the third aspect, determining the retransmission mechanism of the data packet includes: determining a retransmission priority of the data packet based on the first information and/or the second information, where the retransmission priority indicates a priority of retransmitting the data packet by the access network device when the data packet encounters a packet loss; and determining the retransmission mechanism of the data packet based on the retransmission priority of the data packet. The retransmission priority indicates the priority of retransmitting the data packet by the access network device when the data packet encounters a packet loss. For example, when a data packet with a high retransmission priority encounters a packet loss, the access network device preferentially retransmits the data packet. For another example, when a data packet with a medium retransmission priority encounters a packet loss, the access network device retransmits the data packet with the medium retransmission priority after completing retransmission of a data packet with a high retransmission priority. For another example, when a data packet with a low retransmission priority encounters a packet loss, the access network device does not retransmit the data packet with the low retransmission priority.

With reference to the third aspect, in a possible implementation of the third aspect, the first information includes importance information of the data packet; and determining the retransmission priority of the data packet based on the first information and/or the second information includes: determining, based on the importance information of the data packet, the retransmission priority corresponding to the importance information.

With reference to the third aspect, in a possible implementation of the third aspect, the second information includes a QoS parameter of each of a plurality of sub-PDU sets belonging to the same PDU set; and determining the retransmission priority of the data packet based on the first information and/or the second information includes: determining, from the second information, a QoS parameter corresponding to the data packet; and determining the retransmission priority of the data packet based on the QoS parameter corresponding to the data packet.

In this embodiment of this application, the access network device may determine the retransmission priority of the data packet in a plurality of manners, thereby improving implementation flexibility of the solution.

With reference to the third aspect, in a possible implementation of the third aspect, determining the retransmission mechanism of the data packet based on the retransmission priority of the data packet includes: A packet data convergence protocol PDCP layer of the RAN obtains or determines the retransmission priority of the data packet; the PDCP layer of the RAN obtains a transmission status of the data packet, where the transmission status includes a transmission success or a transmission failure; and the PDCP layer of the RAN determines the retransmission mechanism of the data packet based on the transmission status of the data packet and the retransmission priority of the data packet.

With reference to the third aspect, in a possible implementation of the third aspect, that the PDCP layer of the RAN obtains the transmission status of the data packet belonging to the same PDU set includes: The PDCP layer of the RAN receives a status report sent by a radio link control RLC layer of the RAN, where the status report includes the transmission status of the data packet; and the PDCP layer of the RAN obtains or determines, based on the status report sent by the RLC layer, the transmission status of the data packet belonging to the same PDU set.

Alternatively, the PDCP layer of the RAN subscribes to a data packet transmission situation of the RLC layer of the RAN; and the PDCP layer of the RAN receives the transmission status that is of the data packet and that is sent by the RLC layer of the RAN.

With reference to the third aspect, in a possible implementation of the third aspect, the packet data convergence protocol PDCP layer of the RAN includes a first PDCP layer, the plurality of data packets belonging to the same PDU set include a first data packet, and the first data packet belongs to a first sub-PDU set belonging to the same PDU set.

Determining the retransmission priority of the data packet based on the first information and/or the second information includes:
a control plane CU of the RAN determines a retransmission priority of the first data packet based on the second information and/or the first information of the first data packet.

Determining the retransmission mechanism of the data packet based on the retransmission priority of the data packet includes:
the CU of the RAN obtains a transmission status of the first data packet from the first PDCP layer or a first RLC layer of the RAN;
the CU of the RAN determines a retransmission mechanism of the first data packet based on the transmission status of the first data packet and the retransmission priority of the first data packet; and
the CU of the RAN indicates the retransmission mechanism of the first data packet to the first PDCP layer or the first RLC layer of the RAN.

With reference to the third aspect, in a possible implementation of the third aspect, that the control plane CU of the RAN obtains the transmission status of the first data packet from the first PDCP layer includes:
the CU of the RAN receives a status report sent by the first PDCP layer or the first RLC layer of the RAN, where the status report includes the transmission status of the first data packet; or
the CU of the RAN subscribes to a data packet transmission situation of the first PDCP layer or the first RLC layer of the RAN; and
the CU of the RAN receives the transmission status that is of the first data packet and that is sent by the first PDCP layer or the first RLC layer of the RAN.

With reference to the third aspect, in a possible implementation of the third aspect, the PDCP layer of the RAN further includes a second PDCP layer, the plurality of data packets belonging to the same PDU set further include a second data packet, the second data packet belongs to a second sub-PDU set belonging to the same PDU set, and a data packet of the first sub-PDU set and a data packet of the second sub-PDU set are transmitted in different quality of service QoS flows.

Determining the retransmission priority of the data packet based on the first information and/or the second information includes:
the control plane CU of the RAN determines a retransmission priority of the second data packet based on the second information and/or the first information of the second data packet.

Determining the retransmission mechanism of the data packet based on the retransmission priority of the data packet includes:
the CU of the RAN obtains a transmission status of the second data packet from the second PDCP layer or a second RLC layer of the RAN;
the CU of the RAN determines a retransmission mechanism of the first data packet and a retransmission mechanism of the second data packet based on the transmission status of the first data packet, the transmission status of the second data packet, the retransmission priority of the first data packet, and the retransmission priority of the second data packet;
the CU of the RAN indicates the retransmission mechanism of the first data packet to the first PDCP layer or the first RLC layer of the RAN; and
the CU of the RAN indicates the retransmission mechanism of the second data packet to the second PDCP layer or the second RLC layer of the RAN.

With reference to the third aspect, in a possible implementation of the third aspect, that the control plane CU of the RAN obtains the transmission status of the second data packet from the second PDCP layer or the second RLC layer includes:
the CU of the RAN receives a status report sent by the second PDCP layer or the second RLC layer of the RAN, where the status report includes the transmission status of the second data packet; or
the CU of the RAN subscribes to a data packet transmission situation of the second PDCP layer or the second RLC layer of the RAN; and
the CU of the RAN receives the transmission status that is of the second data packet and that is sent by the second PDCP layer or the second RLC layer of the RAN.

With reference to the third aspect, in a possible implementation of the third aspect, the method further includes:
determining a transmission priority of the data packet based on the first information and/or the second information, where the transmission priority indicates a priority of transmitting the data packet by the access network device; and
determining a transmission mechanism of the data packet based on the transmission priority of the data packet.

With reference to the first aspect, the second aspect, or the third aspect, in a possible implementation of the first aspect, the second aspect, or the third aspect, the first information includes any one or more of the following information:
importance information of the data packets belonging to the same PDU set, where the importance information of the data packets indicates QoS flows for carrying the data packets belonging to the same PDU set;
identities of the sub-PDU sets to which the data packets belonging to the same PDU set belong;
an association relationship between the sub-PDU sets to which the data packets belonging to the same PDU set belong and QoS flows for transmitting the sub-PDU sets;
a start packet identifier of the sub-PDU set, where the start packet identifier of the sub-PDU set indicates a 1^{st} data packet in a plurality of data packets included in the sub-PDU set;
an end packet identifier of the sub-PDU set, where the end packet identifier of the sub-PDU set indicates a last data packet in the plurality of data packets included in the sub-PDU set;
a quantity of data packet bits of the sub-PDU set, where the quantity of data packet bits of the sub-PDU set indicates a size of the data packet included in the sub-PDU set; or
a data packet sequence number of the sub-PDU set, where the data packet sequence number of the sub-PDU set indicates a sequence number, in the sub-PDU set, of the data packet included in the sub-PDU set.

With reference to the first aspect, the second aspect, or the third aspect, in a possible implementation of the first aspect, the second aspect, or the third aspect, the second information includes at least one of the following:
an association relationship between the importance information of the data packets belonging to the same PDU set and QoS flows;
an association relationship between the importance information of the data packets belonging to the same PDU set and QoS requirements;
an association relationship between the importance information of the data packets belonging to the same PDU set and QoS parameters;
splitting transmission indication information, where the splitting transmission indication information indicates to map, based on the first information, the data packets belonging to the same PDU set to a plurality of QoS flows for transmission;
a data packet detection rule for the plurality of sub-PDU sets belonging to the same PDU set;
a QoS parameter of each of the plurality of sub-PDU sets belonging to the same PDU set, where the QoS parameter of each sub-PDU set corresponds to a parameter of a QoS flow for carrying the sub-PDU set; or
QoS requirements of the plurality of sub-PDU sets belonging to the same PDU set, where a QoS requirement of each sub-PDU set indicates information about a requirement for a QoS flow for carrying a data packet of the sub-PDU set.

With reference to the first aspect, the second aspect, or the third aspect, in a possible implementation of the first aspect, the second aspect, or the third aspect, the QoS parameter of the sub-PDU set includes any one or more of the following:
a sub-PDU set delay budget sub-PDU set delay budget, a sub-PDU set error rate sub-PDU set error rate, or sub-PDU set integrated handling information sub-PDU set integrated handling information.

According to a fourth aspect, an embodiment of this application provides a protocol data unit set-based communication method. The method is applied to a session management function SMF. It should be noted that the method provided in the fourth aspect may be further applied to another device or hardware or software module having a network function that can implement the session management function. The method includes:
receiving a policy and charging control PCC rule; generating second information according to the PCC rule, where the second information indicates a splitting transmission mechanism of a plurality of data packets of a same protocol data unit set PDU set; and sending the second information.

For example, the SMF generates the second information (for example, a QoS parameter of a sub-PDU set) according to the PCC rule. Then, the SMF sends the second information to a RAN. The SMF may send a QoS profile (profile) to the RAN, and the QoS profile includes the second information.

Optionally, the SMF may further set (or update) a QoS parameter at a sub-PDU set granularity according to the PCC rule. For example, information such as PERs or PSERs of different sub-PDU sets in the same PDU set is set (or updated) according to the PCC rule. Then, the SMF sends the QoS parameter at the sub-PDU set granularity to the RAN.

In this embodiment of this application, the SMF may modify or add first information and/or the second information based on an actual need, to satisfy service requirements of a plurality of services, improve data transmission quality, and improve user experience.

With reference to the fourth aspect, in a possible implementation of the fourth aspect, the second information includes a QoS parameter of each of a plurality of sub-PDU sets belonging to the same PDU set, where the QoS parameter of each sub-PDU set corresponds to a parameter of a QoS flow for carrying the sub-PDU set.

With reference to the fourth aspect, in a possible implementation of the fourth aspect, the QoS parameter of the sub-PDU set includes any one or more of the following: a sub-PDU set delay budget sub-PDU set delay budget, a sub-PDU set error rate sub-PDU set error rate, or sub-PDU set integrated handling information sub-PDU set integrated handling information.

With reference to the fourth aspect, in a possible implementation of the fourth aspect, the QoS parameter of each of the plurality of sub-PDU sets belonging to the same PDU set includes a same sub-PDU set delay budget. Sub-PDU set delay budgets of the plurality of sub-PDU sets in the same PDU set are set to be the same, so that data packets of different sub-PDU sets in the same PDU set arrive at a terminal device at the same time.

With reference to the fourth aspect, in a possible implementation of the fourth aspect, sub-PDU set delay budgets in QoS parameters of the plurality of sub-PDU sets are determined based on importance information of the plurality of sub-PDU sets belonging to the same PDU set.

With reference to the fourth aspect, in a possible implementation of the fourth aspect, a PSDB of the same PDU set is greater than or equal to the sub-PDU set delay budgets in the QoS parameters of the plurality of sub-PDU sets belonging to the same PDU set. The delay budget of the sub-PDU set in the same PDU set should not be greater than the delay budget of the PDU set, to avoid a transmission failure.

With reference to the fourth aspect, in a possible implementation of the fourth aspect, the second information further includes at least one of the following:
an association relationship between the importance information of the data packets belonging to the same PDU set and QoS flows;
an association relationship between the importance information of the data packets belonging to the same PDU set and QoS requirements;
an association relationship between the importance information of the data packets belonging to the same PDU set and QoS parameters;
splitting transmission indication information, where the splitting transmission indication information indicates to map, based on the first information, the data packets belonging to the same PDU set to a plurality of QoS flows for transmission; or
QoS requirements of the plurality of sub-PDU sets belonging to the same PDU set, where a QoS requirement of each sub-PDU set indicates information about a requirement for a QoS flow for carrying a data packet of the sub-PDU set.

According to a fifth aspect, an embodiment of this application provides a protocol data unit set-based communication method. The method is applied to a policy control function PCF, and the method includes:
receiving second information, where the second information indicates a splitting transmission mechanism of data packets of a first protocol data unit set PDU set; generating a policy and charging control PCC rule based on the second information; and sending the PCC rule, where the PCC rule includes information indicating that the plurality of data packets belonging to the same PDU set are transmitted in at least two quality of service QoS flows.

In this embodiment of this application, the PCF may modify or add first information and/or the second information based on an actual need, to satisfy service requirements of a plurality of services, improve data transmission quality, and improve user experience.

With reference to the fifth aspect, in a possible implementation of the fifth aspect, the second information includes at least one of the following:
an association relationship between the importance information of the data packets belonging to the same PDU set and QoS flows;
an association relationship between the importance information of the data packets belonging to the same PDU set and QoS requirements;
an association relationship between the importance information of the data packets belonging to the same PDU set and QoS parameters;
splitting transmission indication information, where the splitting transmission indication information indicates to map, based on the first information, the data packets belonging to the same PDU set to a plurality of QoS flows for transmission;
a data packet detection rule for the plurality of sub-PDU sets belonging to the same PDU set;
a QoS parameter of each of the plurality of sub-PDU sets belonging to the same PDU set, where the QoS parameter of each sub-PDU set corresponds to a parameter of a QoS flow for carrying the sub-PDU set; or
QoS requirements of the plurality of sub-PDU sets belonging to the same PDU set, where a QoS requirement of each sub-PDU set indicates information about a requirement for a QoS flow for carrying a data packet of the sub-PDU set.

According to a sixth aspect, an embodiment of this application provides a communication apparatus. The communication apparatus is used in an application function AF, and the communication apparatus includes a transceiver module and a processing module.

The transceiver module is further configured to send first information, where the first information indicates that a plurality of data packets belonging to a same protocol data unit set PDU set are transmitted in at least two quality of service QoS flows.

The transceiver module is further configured to send the plurality of data packets belonging to the same PDU set, where the plurality of data packets belonging to the same PDU set are transmitted via the at least two QoS flows.

In a possible implementation, the first information includes importance information of each of the plurality of data packets belonging to the same PDU set, and importance information of all of the plurality of data packets belonging to the same PDU set is in one-to-one correspondence with different QoS flows for carrying the data packets belonging to the same PDU set.

In a possible implementation, each of the plurality of data packets belonging to the same PDU set carries the importance information of the data packet.

In a possible implementation, the importance information of the data packet is represented by a coding scheme of the data packet, or the importance information of the data packet is represented by a data type of the data packet.

In a possible implementation, the plurality of data packets belonging to the same PDU set belong to different sub-PDU sets, the first information further includes an identity of a sub-PDU set to which each of the plurality of data packets belonging to the same PDU set belongs, and each sub-PDU set includes at least one data packet.

In a possible implementation, the first information includes an association relationship between sub-PDU sets to which the data packets belonging to the same PDU set belong and QoS flows for carrying the sub-PDU sets.

In a possible implementation, the transceiver module is further configured to send the data packets belonging to the same PDU set, where the data packet carries the first information.

In a possible implementation, the first information includes at least one of the following information:
a start packet identifier of a sub-PDU set, where the start packet identifier of the sub-PDU set indicates a 1^{st} data packet in a plurality of data packets included in the sub-PDU set;
an end packet identifier of the sub-PDU set, where the end packet identifier of the sub-PDU set indicates a last data packet in the plurality of data packets included in the sub-PDU set;
a quantity of data packet bits of the sub-PDU set, where the quantity of data packet bits of the sub-PDU set indicates a size of the data packet included in the sub-PDU set; or
a data packet sequence number of the sub-PDU set, where the data packet sequence number of the sub-PDU set indicates a sequence number, in the sub-PDU set, of the data packet included in the sub-PDU set.

In a possible implementation, the transceiver module is further configured to send second information, where the second information indicates a splitting transmission mechanism of the plurality of data packets belonging to the same PDU set.

The second information includes at least one of the following information:
an association relationship between the importance information of the data packets belonging to the same PDU set and QoS flows;
an association relationship between the importance information of the data packets belonging to the same PDU set and QoS requirements;
an association relationship between the importance information of the data packets belonging to the same PDU set and QoS parameters;
splitting transmission indication information, where the splitting transmission indication information indicates to map, based on the first information, the plurality of data packets belonging to the same PDU set to a plurality of QoS flows for transmission;
a data packet detection rule for the plurality of sub-PDU sets belonging to the same PDU set;
a QoS parameter of each of the plurality of sub-PDU sets belonging to the same PDU set, where the QoS parameter of each sub-PDU set corresponds to a parameter of a QoS flow for carrying the sub-PDU set; or
QoS requirements of the plurality of sub-PDU sets belonging to the same PDU set, where a QoS requirement of each sub-PDU set indicates information about a requirement for a QoS flow for carrying a data packet of the sub-PDU set.

In a possible implementation, the QoS parameter of the sub-PDU set includes any one or more of the following:
a sub-PDU set delay budget sub-PDU set delay budget, a sub-PDU set error rate sub-PDU set error rate, or sub-PDU set integrated handling information sub-PDU set integrated handling information.

According to a seventh aspect, an embodiment of this application provides a communication apparatus. The communication apparatus is used in a user plane function UPF, and the communication apparatus includes a transceiver module and a processing module.

The transceiver module is further configured to receive a plurality of data packets belonging to a same PDU set.

The processing module is further configured to determine, based on first information and/or second information, a QoS flow for carrying the data packet, where the first information indicates that the plurality of data packets belonging to the same PDU set are transmitted in at least two quality of service QoS flows, and the second information indicates a splitting transmission mechanism of the plurality of data packets belonging to the same PDU set.

In a possible implementation, the first information includes importance information of each of the plurality of data packets belonging to the same PDU set, and importance information of all of the plurality of data packets belonging to the same PDU set is in one-to-one correspondence with different QoS flows for carrying the data packets belonging to the same PDU set.

The second information includes an association relationship between the importance information of the data packet and the QoS flow.

The processing module is further configured to determine, based on the importance information of each of the plurality of data packets belonging to the same PDU set and/or the association relationship between the importance information of the data packet and the QoS flow, the QoS flow associated with the importance information of the data packet, where the QoS flow is used to carry the data packet.

In a possible implementation,
the processing module is further configured to determine, based on the first information and/or the second information, a sub-PDU set to which the data packet belongs, where the plurality of data packets belonging to the same PDU set belong to different sub-PDU sets, and each sub-PDU set includes at least one data packet; and
the processing module is further configured to determine, based on the sub-PDU set to which the data packet belongs, a QoS flow corresponding to the sub-PDU set, where the QoS flow is used to carry the data packet.

In a possible implementation,
the second information includes a data packet detection rule for the plurality of sub-PDU sets belonging to the same PDU set; and
the processing module is further configured to perform detection on data of the data packet according to the data packet detection rule for the plurality of sub-PDU sets belonging to the same PDU set, to determine the sub-PDU set to which the data packet belongs.

In a possible implementation,
the first information includes an association relationship between sub-PDU sets to which the data packets belonging to the same PDU set belong and quality of service QoS flows for carrying the sub-PDU sets; and
the processing module is further configured to determine, based on the association relationship between the sub-PDU sets to which the data packets belong and the QoS flows for carrying the sub-PDU sets, the QoS flow corresponding to the data packet, where the QoS flow is used to carry the data packet.

In a possible implementation,
the processing module is further configured to obtain, based on the data packet and the first information, a data packet including the first information; and
the transceiver module is further configured to map the data packet including the first information to the QoS flow for transmission.

In a possible implementation, the first information includes any one or more of the following information:
importance information of the data packets belonging to the same PDU set;
identities of the sub-PDU sets to which the data packets belonging to the same PDU set belong;
an association relationship between the sub-PDU sets to which the data packets belonging to the same PDU set belong and QoS flows for transmitting the sub-PDU sets;
a start packet identifier of the sub-PDU set, where the start packet identifier of the sub-PDU set indicates a 1^{st} data packet in a plurality of data packets included in the sub-PDU set;
an end packet identifier of the sub-PDU set, where the end packet identifier of the sub-PDU set indicates a last data packet in the plurality of data packets included in the sub-PDU set;
a quantity of data packet bits of the sub-PDU set, where the quantity of data packet bits of the sub-PDU set indicates a size of the data packet included in the sub-PDU set; or
a data packet sequence number of the sub-PDU set, where the data packet sequence number of the sub-PDU set indicates a sequence number, in the sub-PDU set, of the data packet included in the sub-PDU set.

In a possible implementation, the second information includes at least one of the following:
an association relationship between the importance information of the data packets belonging to the same PDU set and QoS flows;
splitting transmission indication information, where the splitting transmission indication information indicates to map, based on the first information, the data packets belonging to the same PDU set to a plurality of QoS flows for transmission; or
the data packet detection rule for the plurality of sub-PDU sets belonging to the same PDU set.

According to an eighth aspect, an embodiment of this application provides a communication apparatus. The communication apparatus is used in an access network device RAN, and the communication apparatus includes a transceiver module and a processing module.

The transceiver module is further configured to receive a plurality of data packets belonging to a same protocol data unit set PDU set.

The processing module is further configured to determine, based on first information and/or second information, a data radio bearer DRB for carrying the data packet, where the first information indicates that the plurality of data packets belonging to the same PDU set are transmitted in at least two quality of service QoS flows, and the second information indicates a splitting transmission mechanism of the plurality of data packets belonging to the same PDU set.

The transceiver module is further configured to map the data packet to the determined DRB for carrying the data packet.

In a possible implementation,
the processing module is further configured to determine, based on the first information and/or the second information, a sub-PDU set to which the data packet belongs, where the plurality of data packets belonging to the same PDU set belong to different sub-PDU sets, and each sub-PDU set includes at least one data packet; and
the processing module is further configured to determine, based on the sub-PDU set to which the data packet belongs, the DRB corresponding to the sub-PDU set, where the DRB is used to carry the data packet.

In a possible implementation,
the processing module is further configured to determine a retransmission mechanism of the data packet based on the first information and/or the second information.

In a possible implementation,
the processing module is further configured to determine a retransmission priority of the data packet based on the first information and/or the second information, where the retransmission priority indicates a priority of retransmitting the data packet by the access network device when the data packet encounters a packet loss; and
the processing module is further configured to determine the retransmission mechanism of the data packet based on the retransmission priority of the data packet.

In a possible implementation,
the processing module is further configured to determine a transmission priority of the data packet based on the first information and/or the second information, where the transmission priority indicates a priority of transmitting the data packet by the access network device; and
the processing module is further configured to determine a transmission mechanism of the data packet based on the transmission priority of the data packet.

In a possible implementation, the first information includes any one or more of the following information:
importance information of the data packets belonging to the same PDU set, where the importance information of the data packets indicates QoS flows for carrying the data packets belonging to the same PDU set;
identities of the sub-PDU sets to which the data packets belonging to the same PDU set belong;
an association relationship between the sub-PDU sets to which the data packets belonging to the same PDU set belong and QoS flows for transmitting the sub-PDU sets;
a start packet identifier of the sub-PDU set, where the start packet identifier of the sub-PDU set indicates a 1^{st} data packet in a plurality of data packets included in the sub-PDU set;
an end packet identifier of the sub-PDU set, where the end packet identifier of the sub-PDU set indicates a last data packet in the plurality of data packets included in the sub-PDU set;
a quantity of data packet bits of the sub-PDU set, where the quantity of data packet bits of the sub-PDU set indicates a size of the data packet included in the sub-PDU set; or
a data packet sequence number of the sub-PDU set, where the data packet sequence number of the sub-PDU set indicates a sequence number, in the sub-PDU set, of the data packet included in the sub-PDU set.

In a possible implementation, the second information includes at least one of the following:
an association relationship between the importance information of the data packets belonging to the same PDU set and QoS flows;
an association relationship between the importance information of the data packets belonging to the same PDU set and QoS requirements;
an association relationship between the importance information of the data packets belonging to the same PDU set and QoS parameters;
splitting transmission indication information, where the splitting transmission indication information indicates to map, based on the first information, the data packets belonging to the same PDU set to a plurality of QoS flows for transmission;
a data packet detection rule for the plurality of sub-PDU sets belonging to the same PDU set;
a QoS parameter of each of the plurality of sub-PDU sets belonging to the same PDU set, where the QoS parameter of each sub-PDU set corresponds to a parameter of a QoS flow for carrying the sub-PDU set; or
QoS requirements of the plurality of sub-PDU sets belonging to the same PDU set, where a QoS requirement of each sub-PDU set indicates information about a requirement for a QoS flow for carrying a data packet of the sub-PDU set.

According to a ninth aspect, an embodiment of this application provides a communication apparatus. The communication apparatus is used in a session management function SMF, and the communication apparatus includes a transceiver module and a processing module.

The transceiver module is further configured to receive a policy and charging control PCC rule; generate second information according to the PCC rule, where the second information indicates a splitting transmission mechanism of a plurality of data packets of a first protocol data unit set PDU set; and send the second information.

In a possible implementation, the second information includes a QoS parameter of each of a plurality of sub-PDU sets belonging to the same PDU set, where the QoS parameter of each sub-PDU set corresponds to a parameter of a QoS flow for carrying the sub-PDU set.

In a possible implementation, the QoS parameter of the sub-PDU set includes any one or more of the following: a sub-PDU set delay budget sub-PDU set delay budget, a sub-PDU set error rate sub-PDU set error rate, or sub-PDU set integrated handling information sub-PDU set integrated handling information.

In a possible implementation, the QoS parameter of each of the plurality of sub-PDU sets belonging to the same PDU set includes a same sub-PDU set delay budget.

In a possible implementation,
the processing module is further configured to determine sub-PDU set delay budgets in QoS parameters of the plurality of sub-PDU sets based on importance information of the plurality of sub-PDU sets belonging to the same PDU set.

In a possible implementation, a PSDB of the same PDU set is greater than or equal to the sub-PDU set delay budgets in the QoS parameters of the plurality of sub-PDU sets belonging to the same PDU set.

In a possible implementation, at least one of the following is further included:
an association relationship between the importance information of the data packets belonging to the same PDU set and QoS flows;
an association relationship between the importance information of the data packets belonging to the same PDU set and QoS requirements;
an association relationship between the importance information of the data packets belonging to the same PDU set and QoS parameters;
splitting transmission indication information, where the splitting transmission indication information indicates to map, based on the first information, the data packets belonging to the same PDU set to a plurality of QoS flows for transmission; or
QoS requirements of the plurality of sub-PDU sets belonging to the same PDU set, where a QoS requirement of each sub-PDU set indicates information about a requirement for a QoS flow for carrying a data packet of the sub-PDU set.

According to a tenth aspect, an embodiment of this application provides a communication apparatus. The communication apparatus is used in a policy control function PCF, and the communication apparatus includes a transceiver module and a processing module.

The transceiver module is further configured to receive second information, where the second information indicates a splitting transmission mechanism of data packets of a first protocol data unit set PDU set.

The processing module is further configured to generate a policy and charging control PCC rule based on the second information.

The transceiver module is further configured to send the PCC rule, where the PCC rule includes information indicating that the plurality of data packets belonging to the same PDU set are transmitted in at least two quality of service QoS flows.

In a possible implementation, the second information includes at least one of the following:
an association relationship between the importance information of the data packets belonging to the same PDU set and QoS flows;
an association relationship between the importance information of the data packets belonging to the same PDU set and QoS requirements;
an association relationship between the importance information of the data packets belonging to the same PDU set and QoS parameters;
splitting transmission indication information, where the splitting transmission indication information indicates to map, based on the first information, the data packets belonging to the same PDU set to a plurality of QoS flows for transmission;
a data packet detection rule for the plurality of sub-PDU sets belonging to the same PDU set;
a QoS parameter of each of the plurality of sub-PDU sets belonging to the same PDU set, where the QoS parameter of each sub-PDU set corresponds to a parameter of a QoS flow for carrying the sub-PDU set; or
QoS requirements of the plurality of sub-PDU sets belonging to the same PDU set, where a QoS requirement of each sub-PDU set indicates information about a requirement for a QoS flow for carrying a data packet of the sub-PDU set.

An eleventh aspect of this application provides a communication apparatus. The apparatus may implement the method in any one of the first aspect or the possible implementations of the first aspect. The apparatus includes a corresponding unit or module configured to perform the method. The unit or module included in the apparatus can be implemented by software and/or hardware. For example, the apparatus may be an application function, or the apparatus may be a component (for example, a processor, a chip, or a chip system) in an application function, or the apparatus may be a logical module or software that can implement all or some functions of an application function. The communication apparatus includes a transceiver module and a processing module. For example, the communication apparatus is a server having an application function.

A twelfth aspect of this application provides a communication apparatus. The apparatus may implement the method in any one of the second aspect or the possible implementations of the second aspect. The apparatus includes a corresponding unit or module configured to perform the method. The unit or module included in the apparatus can be implemented by software and/or hardware. For example, the apparatus may be a user plane function, or the apparatus may be a component (for example, a processor, a chip, or a chip system) in a user plane function, or the apparatus may be a logical module or software that can implement all or some functions of a user plane function. The communication apparatus includes a transceiver module and a processing module.

A thirteenth aspect of this application provides a communication apparatus. The apparatus may implement the method in any one of the third aspect or the possible implementations of the third aspect. The apparatus includes a corresponding unit or module configured to perform the method. The unit or module included in the apparatus can be implemented by software and/or hardware. For example, the apparatus may be an access network device, or the apparatus may be a component (for example, a processor, a chip, or a chip system) in an access network device, or the apparatus may be a logical module or software that can implement all or some functions of an access network device. The communication apparatus includes a transceiver module and a processing module.

A fourteenth aspect of this application provides a communication apparatus. The apparatus may implement the method in any one of the fourth aspect or the possible implementations of the fourth aspect. The apparatus includes a corresponding unit or module configured to perform the method. The unit or module included in the apparatus can be implemented by software and/or hardware. For example, the apparatus may be a session management function, or the apparatus may be a component (for example, a processor, a chip, or a chip system) in a session management function, or the apparatus may be a logical module or software that can implement all or some functions of a session management function. The communication apparatus includes a transceiver module and a processing module.

A fifteenth aspect of this application provides a communication apparatus. The apparatus may implement the method in any one of the fifth aspect or the possible implementations of the fifth aspect. The apparatus includes a corresponding unit or module configured to perform the method. The unit or module included in the apparatus can be implemented by software and/or hardware. For example, the apparatus may be a policy control function, or the apparatus may be a component (for example, a processor, a chip, or a chip system) in a policy control function, or the apparatus may be a logical module or software that can implement all or some functions of a policy control function. The communication apparatus includes a transceiver module and a processing module.

A sixteenth aspect of embodiments of this application provides a communication apparatus, including at least one processor. The at least one processor is coupled to a memory. The memory is configured to store a program or instructions. The at least one processor is configured to execute the program or the instructions, so that the apparatus implements the method in any possible implementation of the first aspect to the fifth aspect.

A seventeenth aspect of embodiments of this application provides a communication apparatus, including a communication interface, configured to input and/or output signaling or data; and a processor, configured to execute a computer-executable program, so that the apparatus implements the method in any possible implementation of the first aspect to the fifth aspect.

An eighteenth aspect of embodiments of this application provides a communication apparatus, including at least one logic circuit and an input/output interface. The input/output interface is configured to input or output information. The logic circuit is configured to perform the method in any possible implementation of the first aspect to the fifth aspect.

A nineteenth aspect of embodiments of this application provides a computer program product (or referred to as a computer program). When the computer program product is executed by a processor, the processor performs the method in the first aspect to the fifth aspect and any possible implementation of the first aspect to the fifth aspect.

A twentieth aspect of embodiments of this application provides a chip system. The chip system includes at least one processor, configured to support a communication apparatus in implementing the method in the first aspect to the fifth aspect and any possible implementation of the first aspect to the fifth aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A twenty-first aspect of embodiments of this application provides a communication system. The communication system includes the communication apparatus in the sixth aspect, the communication apparatus in the seventh aspect, the communication apparatus in the eighth aspect, the communication apparatus in the ninth aspect, and/or the communication apparatus in the tenth aspect.

For technical effects brought by any design manner of the sixth aspect to the twenty-first aspect, refer to technical effects brought by different implementations of the first aspect to the fifth aspect. Details are not described herein again.

A twenty-second aspect of embodiments of this application provides a protocol data unit set-based communication method. The method is applied to a communication system, the communication system includes an application function and a user plane function, and the method includes:
the application function sends first information, where the first information indicates that a plurality of data packets belonging to a same protocol data unit set PDU set are transmitted in at least two quality of service QoS flows;
the application function sends the plurality of data packets belonging to the same PDU set;
the user plane function receives the plurality of data packets belonging to the same PDU set; and
the user plane function determines, based on the first information and/or the second information, a QoS flow for carrying the data packet.

In a possible implementation, the communication system further includes an access network device, and the method further includes:
the access network device receives the plurality of data packets belonging to the same protocol data unit set PDU set;
the access network device determines, based on the first information and/or the second information, a data radio bearer DRB for carrying the data packet; and
the access network device maps the data packet to the determined DRB for carrying the data packet.

A twenty-third aspect of embodiments of this application provides a protocol data unit set-based communication method. The method is applied to a communication system, the communication system includes a user plane function and an access network device, and the method includes:
the user plane function receives a plurality of data packets belonging to a same PDU set;
the user plane function determines, based on first information and/or second information, a QoS flow for carrying the data packet, where the first information indicates that the plurality of data packets belonging to the same PDU set are transmitted in at least two quality of service QoS flows, and the second information indicates a splitting transmission mechanism of the plurality of data packets belonging to the same PDU set;
the access network device receives the plurality of data packets belonging to the same protocol data unit set PDU set;
the access network device determines, based on the first information and/or the second information, a data radio bearer DRB for carrying the data packet; and
the access network device maps the data packet to the determined DRB for carrying the data packet.

In a possible implementation, the communication system further includes an application function, and the method further includes:
the application function sends the first information; and
the application function sends the plurality of data packets belonging to the same PDU set.

It should be understood that, for a component in the device, the foregoing "sending" may be referred to as "outputting", and the foregoing "receiving" may be referred to as "inputting".

### BRIEF DESCRIPTION OF DRAWINGS

FIG. 1 is a diagram of a communication system according to an embodiment of this application;
FIG. 2 is a diagram of a processing procedure for a PDU set;
FIG. 3 is a diagram of a 3D MVC media frame;
FIG. 4 is a schematic flowchart of an embodiment of a protocol data unit set-based communication method according to an embodiment of this application;
FIG. 5 is a diagram of a sub-PDU set according to an embodiment of this application;
FIG. 6 is a schematic flowchart of another embodiment of a protocol data unit set-based communication method according to an embodiment of this application;
FIG. 7 is a schematic flowchart of another embodiment of a protocol data unit set-based communication method according to an embodiment of this application;
FIG. 8 is a schematic flowchart of another embodiment of a protocol data unit set-based communication method according to an embodiment of this application;
FIG. 9 is a diagram of a structure of a first PDU set according to an embodiment of this application;
FIG. 10 is a diagram of data packet transmission according to an embodiment of this application;
FIG. 11 is a schematic flowchart of another embodiment of a protocol data unit set-based communication method according to an embodiment of this application;
FIG. 12 is another diagram of data packet transmission according to an embodiment of this application;
FIG. 13 is a schematic flowchart of another embodiment of a protocol data unit set-based communication method according to an embodiment of this application;
FIG. 14 is a diagram of an application scenario according to an embodiment of this application;
FIG. 15 is a diagram of a communication apparatus according to this application;
FIG. 16 is another diagram of a communication apparatus according to this application;
FIG. 17 is another diagram of a communication apparatus according to this application; and
FIG. 18 is another diagram of a communication apparatus according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. The terms "first" and "second", corresponding term numbers, and the like in this specification, the claims, and the accompanying drawings of this application are used for distinguishing between similar objects, and are not necessarily used for describing a specific sequence or order. It should be understood that the terms used in such a way are interchangeable in proper circumstances. This is merely a discrimination manner that is used when objects having a same attribute are described in embodiments of this application. In addition, the terms "include", "have", and any variants thereof are intended to cover non-exclusive inclusion, so that a process, method, system, product, or device including a series of units is not necessarily limited to those units, but may include other units that are not clearly listed or are inherent to the process, method, product, or device.

In the descriptions of this application, "/" means "or", unless otherwise specified. For example, A/B may represent A or B. In this application, "and/or" describes only an association relationship between associated objects and represents that three relationships may exist. For example, A and/or B may represent the following three cases: Only A exists, both A and B exist, and only B exists. In addition, in the descriptions of this application, "at least one item" means one or more items, and "a plurality of items" means two or more items. "At least one of the following items (pieces)" or a similar expression thereof refers to any combination of these items, including a single item (piece) or any combination of a plurality of items (pieces). For example, at least one item (piece) of a, b, or c may represent a, b, c, a and b, a and c, b and c, or a, b, and c, where a, b, and c may be singular or plural.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new generation (new generation, NR) communication system, or a future 6th generation communication system.

In various communication systems, a part operated by an operator may be referred to as an operator network. The operator network may also be referred to as a public land mobile network (public land mobile network, PLMN), is a network established and operated by a government or an operator approved by the government to provide a land mobile communication service for the public, and is mainly a public network through which a mobile network operator (mobile network operator, MNO) provides a mobile broadband access service for a user. The operator network or the PLMN described in embodiments of this application may be a network compliant with a requirement of a 3rd generation partnership project (3rd generation partnership project, 3GPP) standard, which is referred to as a 3GPP network for short. Generally, the 3GPP network is operated by the operator, and includes but is not limited to a 5th generation (5th generation, 5G) mobile communication network, a 4th generation (4th generation, 4G) mobile communication network, or a 3rd generation (3rd generation, 3G) mobile communication technology network. A future 6th generation (6th generation, 6G) mobile communication network is also included.

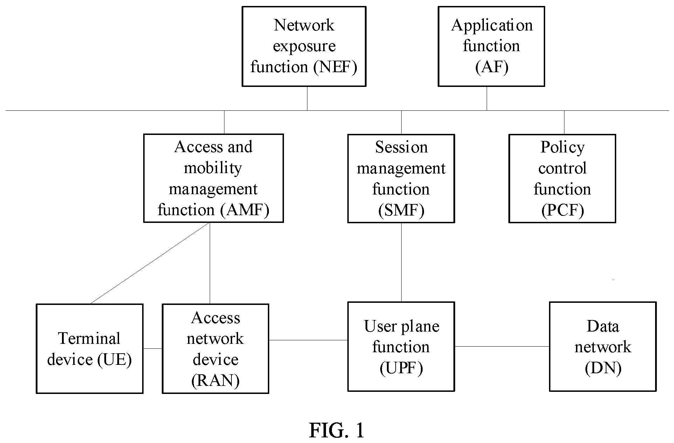

Refer to FIG. 1. FIG. 1 is a diagram of a communication system according to an embodiment of this application. As shown in FIG. 1, the communication system includes an access and mobility management function (access and mobility management function, AMF), a session management function (session management function, SMF), a unified data management (unified data management, UDM), a radio access network (radio access network, RAN), a policy control function (policy control function, PCF), a terminal device, a user plane function (user plane function, UPF), a network exposure function (network exposure function, NEF), an application function (Application Function, AF), a data network (data network, DN), and the like.

The following briefly describes network functions (or network elements) shown in FIG. 1.

The terminal device may be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device having a wireless connection function or a vehicle-mounted device. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile network, or the like. This is not limited in embodiments of this application.

By way of example and not limitation, in embodiments of this application, the terminal device may alternatively be a wearable device. The wearable device may also be referred to as a wearable intelligent device or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also implements a powerful function through software support, data exchange, and cloud interaction. Generalized wearable intelligent devices include full-featured and large-sized devices that can implement complete or partial functions without depending on a smartphone, for example, a smartwatch or smart glasses, and devices that focus on only one type of application function and need to work with another device such as a smartphone, for example, various smart bands or smart jewelry for monitoring physical signs.

In addition, in embodiments of this application, the terminal device may alternatively be a terminal device in an internet of things (internet of things, IoT) system. IoT is an important part of future information technology development. A main technical feature of IoT is that an article is connected to a network by using a communication technology, to implement an intelligent network of man-machine interconnection and interconnection between things.

It should be noted that a terminal device and an access network device may communicate with each other by using an air interface technology (for example, an NR technology or an LTE technology). Terminal devices may also communicate with each other by using an air interface technology (for example, an NR technology or an LTE technology).

In embodiments of this application, the terminal device may be replaced with an apparatus configured to implement a function of the terminal device, or may be an apparatus that can support the terminal device in implementing the function, for example, a chip system or a chip. The apparatus may be installed in the terminal device. In addition, the chip system may include a chip, or may include a chip and another discrete component.

The access network device (also referred to as a radio access network) may be a device having wireless receiving and sending functions. The access network device may be a device that provides a wireless communication function service, is usually located on a network side, and includes but is not limited to: a next generation base station (gNodeB, gNB) in a 5th generation communication system, a next generation base station in a 6th generation mobile communication system, a base station in a future mobile communication system, an access node in a Wi-Fi system, an evolved NodeB (evolved NodeB, eNB) in an LTE system, a radio network controller (radio network controller, RNC), a NodeB (NodeB, NB), a base station controller (base station controller, BSC), a home base station (for example, a home evolved NodeB or a home NodeB, HNB), a radio access point, a baseband unit (baseband unit, BBU), a transmission reception point (transmission reception point, TRP), a transmitting point (transmitting point, TP), a base transceiver station (base transceiver station, BTS), and the like. In a network structure, the access network device may include a central unit (central unit, CU) node, a distributed unit (distributed unit, DU) node, a RAN device including a CU node and a DU node, or a RAN device including a control plane CU node, a user plane CU node, and a DU node. The access network device serves a cell, and user equipment communicates with a base station via a transmission resource (for example, a frequency domain resource, namely, a spectrum resource) used in the cell. The cell may be a cell corresponding to a base station (for example, the base station). The cell may belong to a macro base station, or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing a high-rate data transmission service. The access network device may be a macro base station, or may be a micro base station or an indoor base station, or may be a relay node or a donor node, a device that provides a wireless communication service for the user equipment in a V2X communication system, a radio controller in a cloud radio access network (cloud radio access network, CRAN) scenario, a relay station, a vehicle-mounted device, a wearable device, a network device in a future evolved network, or the like. Neither of a specific technology and a specific device form used for the access network device is limited in embodiments of this application.

A unified data management unit (also referred to as a unified data management network element, a unified data management network element entity, a data management device, or a unified data management network element device) is a type of core network device, and is mainly configured for handling of a terminal device identifier, access authentication, registration, mobility management, and the like. The unified data management is a control plane device.

The policy control function (also referred to as a policy control network element, a policy control function network element, a policy control device, a policy control function network element entity, or the like) is a policy control function network element mainly responsible for session-level or service flow-level charging, quality of service bandwidth guarantee, mobility management, terminal device policy decision, and the like.

The session management function (also referred to as a session management function network element) is mainly configured to perform functions such as session management, execution of a control policy delivered by the PCF, UPF selection, and internet protocol address assignment to the terminal device.

The access and mobility management function (also referred to as an access and mobility management function entity, an access and mobility management device, an access and mobility management function network element, an access management device, or a mobility management device) is a type of core network device, is mainly configured to perform mobility management, access management, and the like, and may be configured to implement functions other than session management in functions of a mobility management entity (mobility management entity, MME), for example, lawful interception, access authorization (or authentication), user equipment registration, mobility management, a tracking area update procedure, reachability detection, selection of a session management network element, and mobility state transition management.

The user plane function (also referred to as a user plane device, a user plane function network element, a user plane network element, or a user plane function entity) mainly includes the following functions: user plane-related functions such as data packet routing and transmission, packet detection, service usage reporting, QoS handling, lawful interception, uplink packet detection, and downlink data packet storage.

The application function AF is similar to an application server, interacts with another 5G core network control plane (NF), and provides a service. The AF may exist for different application services, and may belong to an operator or a trusted third party. For example, a main function of such a network element is to notify the PCF of a latest service requirement of a third-party enterprise for an application. The PCF generates a corresponding quality of service (quality of service, QoS) rule based on the requirement, to ensure that a service provided by a network satisfies the requirement proposed by the third party.

The network exposure function NEF may also be referred to as a network exposure device, a network exposure function entity, a network exposure function network element, a network capability exposure function entity, a network capability exposure function device, a network capability exposure function network element, or a network capability exposure device. The NEF is mainly configured to support capability and event exposure, for example, securely expose, to the outside, a service, a capability, or the like provided by a 3GPP network function.

It should be understood that the RAN, the SMF, the PCF, or the AF in embodiments of this application may also be referred to as a communication apparatus or a communication device, and may be a general-purpose device or a dedicated device. This is not specifically limited in this application.

It should be further understood that the foregoing names are merely used to distinguish between different functions, and do not represent that these devices are separate physical devices. Specific forms of the foregoing devices are not limited in this application. For example, the devices may be integrated into a same physical device, or may be separately different physical devices. During actual deployment, network functions (or functions for short), network elements, or devices may be co-deployed. For example, the access and mobility management function network element and the session management function network element may be co-deployed, and the session management function network element and the user plane function network element may be co-deployed. When two functions are co-deployed, interaction between the two functions provided in embodiments of this application becomes an internal operation of the co-deployed functions or may be omitted.

It may be understood that the foregoing function may be a network element in a hardware device, a software function running on dedicated hardware, a combination of hardware and software, or a virtualization function instantiated on a platform (for example, a cloud platform).

It should be noted that names of the devices (such as the AF, the SMF, the PCF, and the AMF) in FIG. 1 are merely names, and the names do not constitute a limitation on functions of the devices. In a 5G network and another future network, the devices may alternatively have other names. This is not specifically limited in this application. For example, in a 6G network, some or all of the foregoing network elements may still use terms in 5G, or may have other names. A general description is provided herein. Details are not described again below.

It should be noted that examples mentioned in this application do not represent the optimal; "first", "second", and the like mentioned in this application are merely used to distinguish between different information, messages, or other objects, and do not represent a sequence relationship; and mutual reference may be made to embodiments in this application. Same or similar steps or terms are not described one by one again.

To better understand the technical solutions in embodiments of this application, the following describes some technical concepts in embodiments of this application.

### 1. Network coding (network coding, NC)

A network coding function in this application includes performing network coding on an original data packet and adding a coded packet header. The network coding function may further include a process of processing an original data unit, for example, a service data unit (service data unit, SDU) or a protocol data unit (protocol data unit, PDU), to obtain the original data packet. The processing may include one or more of segmentation, concatenation, or padding (padding). A network coding function of a transmitter corresponds to a network decoding function of a receiver. The receiver may restore K original data packets by decoding at least K successfully received coded packets together, where K is a positive integer. A protocol layer with the network coding function or the decoding function corresponding to network coding is referred to as a network coding/decoding layer. In this application, the network coding/decoding layer is referred to as a network coding layer for short. In other words, the protocol layer with network coding is referred to as the network coding layer.

The network coding layer may be a protocol layer like a radio resource control (radio resource control, RRC) layer, a service data adaptation protocol (service data adaptation protocol, SDAP) layer, a packet data convergence protocol (packet data convergence protocol, PDCP) layer, a backhaul adaptation protocol (backhaul adaptation protocol, BAP) layer, a radio link control (radio link control, RLC) layer, a medium access control (medium access control, MAC) layer, or a physical layer (physical layer, PHY). The network coding layer may alternatively be a new protocol layer other than the PHY layer, the MAC layer, the RLC layer, the BAP layer, the PDCP layer, the SDAP layer, and the RRC layer. The network coding layer may be added above the PDCP layer (for example, in 5G NR, the network coding layer is added between the PDCP layer and the SDAP layer), or the network coding layer is added above the BAP layer, or the network coding layer is added between the PDCP layer and the RLC layer, or the network coding layer is added between the RLC layer and the MAC layer, or the network coding layer is added between the MAC layer and the PHY layer.

A data packet included in a PDU set (PDU SET, or referred to as a PDU set or a PDU Set) is used as an example. The PDU set includes an internet protocol (Internet Protocol, IP) data packet (packet), and the IP data packet is a data packet at a PDU granularity. The data packet included in the PDU set may also be referred to as a PDU data packet, a PDU, or a data packet for short.

At the SDAP layer, the IP packet is used as an SDAP SDU, and a data packet header (header, H) of the SDAP SDU is added. Then, the SDAP layer forwards the SDAP SDU and the header added at the SDAP layer as a complete data packet (for ease of description, the complete data packet is referred to as an SDAP data packet) to the PDCP layer.

At the PDCP layer, the SDAP data packet is used as a PDCP SDU, and a data packet header of the PDCP SDU is added. Then, the PDCP layer forwards the PDCP SDU and the header added at the PDCP layer as a complete data packet (for ease of description, the complete data packet is referred to as a PDCP data packet) to the RLC layer.

At the RLC layer, the PDCP data packet is used as an RLC SDU, and a data packet header of the RLC SDU is added. Then, the RLC layer forwards the RLC SDU and the header added at the RLC layer as a complete data packet (for ease of description, the complete data packet is referred to as an RLC data packet) to the MAC layer. It should be noted that, at the RLC layer, segmentation processing may be performed on the PDCP data packet. For example, a PDCP data packet corresponding to an m^{th} IP packet is segmented into two service data unit segments (SDU segment) at the RLC layer. The RLC layer uses the SDU segments as RLC SDUs, and then headers are respectively added.

At the MAC layer, the RLC data packet is used as a MAC SDU, and a data packet header of the MAC SDU is added. The MAC layer concatenates one or more MAC SDUs and corresponding headers, to form a MAC PDU.

It should be noted that the data packet in this embodiment of this application may be a protocol data unit (PDU), or may be a service data unit (SDU), for example, a service data adaptation protocol (SDAP) SDU, a packet data convergence protocol (PDCP) SDU, a radio link control (RLC) SDU, or a medium access control (MAC) SDU. It may be understood that, for a data packet sent from a user plane function (UPF) to an access network device, the data packet may be in a format of a protocol data unit. When the access network device receives the data packet from an SDAP layer, the data packet may change a format of an SDAP SDU. When the data packet is transmitted from the SDAP layer to a PDCP layer, the data packet is converted into a PDCP SDU upon arrival at the PDCP layer. Similarly, after the data packet arrives at an RLC layer, the data packet is converted into an RLC SDU. After the data packet arrives at a MAC layer, the data packet is converted into a MAC SDU. A data unit at a data packet granularity processed at each layer may be different. It may be understood that the data packet in this embodiment of this application may alternatively be a data unit at another granularity. This is not limited in this embodiment of this application.

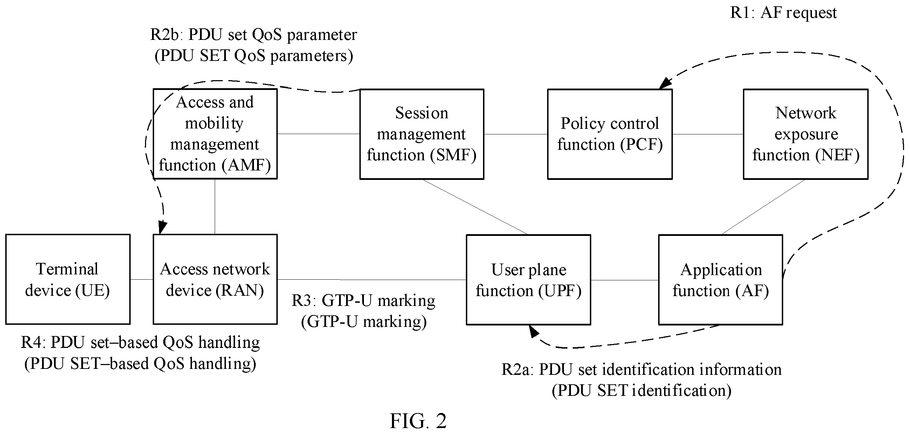

2. PDU set The PDU set may also be referred to as a set of PDUs. The PDU set includes one or more PDU data packets. The following describes a processing procedure for the PDU set in a 5G system (5G system, 5GS) with reference to the accompanying drawings. Refer to FIG. 2. FIG. 2 is a diagram of a processing procedure for a PDU set.

R1: An AF sends an AF request (AF request) to a PCF, where the AF request carries PDU set-related information. The PDU set-related information may also be referred to as PDU set information (PDU SET information). The PDU set-related information includes flow characteristic information (protocol description), a QoS parameter (QoS parameters) of the PDU set, and/or a QoS requirement of the PDU set. The QoS parameter of the PDU set includes a PDU set delay budget (PDU Set Delay Budget, PSDB), a PDU set error rate (PDU Set Error Rate, PSER), and/or PDU set integrated handling information (PDU Set Integrated Handling Information, PSIHI).

The PDU set information specifically includes any one or more of the following information: a PDU set sequence number (PDU Set Sequence Number), an indication of an end PDU of the PDU set (Indication of End PDU of the PDU Set), a PDU sequence number within the PDU set (PDU Sequence Number within a PDU Set), a PDU set size in bytes (PDU Set Size in bytes), or PDU set importance (PDU Set Importance). The PDU set importance is used to identify relative importance of the PDU set compared to other PDU sets within a QoS flow (which identifies the relative importance of a PDU Set compared to other PDU Sets within a QoS Flow).

Correspondingly, the PCF generates a PDU set-related policy and charging control (PCC) rule based on the PDU set-related information provided by the AF. The PCF transfers the PDU set-related PCC rule to an SMF.

Correspondingly, the SMF obtains a PDU set-related QoS parameter and a PDU set detection rule according to the PCC rule.

R2a: The AF sends PDU set identification information (PDU SET identification) to a UPF.

R2b: The SMF sends the QoS parameter of the PDU set to a RAN through an AMF.

R3: The UPF identifies, based on the PDU set identification information, data packets belonging to a same PDU set. Then, PDU set information of the PDU set to which the data packet belongs is carried in a general packet radio service tunneling protocol-user plane (general packet radio service tunneling protocol-user plane, GTP-U) packet header of the data packet. The UPF sends, to the RAN, the data packet carrying the PDU set information, to transfer the PDU set information to the RAN.

### 3. Point cloud data (point cloud data)

The point cloud data or 3D point cloud data refers to a set of vectors in a three-dimensional coordinate system. The point cloud data is obtained by scanning an environment by using a laser sensor (for example, a lidar) or a camera matrix. In addition, the point cloud data is recorded in a form of points, and each point includes three-dimensional coordinates.

In some cases, the point in the point cloud data may include information such as spatial position information and reflection intensity. The reflection intensity information refers to echo intensity collected by a receiving apparatus of a laser scanner. The reflection intensity information is related to a surface material, roughness, and an incident angle direction of a target, emission energy of an instrument, and a laser wavelength. For example, three-dimensional point cloud data in a scene may be collected through LiDAR (light detection and ranging, light detection and ranging). The measured point cloud data is a discrete point representation of a digital surface model (digital surface model, DSM), and the point cloud data includes spatial three-dimensional information and laser intensity information.

In some other cases, the point in the point cloud data may include information such as spatial position information, a color, a reflectivity, or a normal vector. The point cloud data may be used in various applications, for example, 3D immersive telepresence, a virtual reality (virtual reality, VR) service, an extended reality (extended reality, XR) service, 3D video playback, a geographic information system, a cultural heritage, a navigation service based on a 3D dynamic map, or an intelligent driving application.

### 4. 3D media frame

The media frame in embodiments of this application may also be referred to as a multimedia audio/video frame or a video frame. This is not limited in embodiments of this application. In a 3D scenario, 3D expression may be implemented in a plurality of manners. For example, 3D expression is implemented by using point cloud data, or 3D expression is implemented by using data of a plurality of views (or left and right eye data of a single view). The 3D media frame can support transmission of a plurality of data flows.

That 3D expression is implemented by using point cloud data is first described.

Point cloud data in the 3D scenario may be classified into geometric data (or referred to as a geometric data flow) and attribute data (or referred to as an attribute data flow) based on data attributes. The geometric data includes coordinate information of a point corresponding to the point cloud data in a three-dimensional coordinate system, and is basic information of the point cloud data. The attribute data includes attribute information of the point corresponding to the point cloud data, for example, color information, reflectivity information, or normal vector information. The attribute data needs to be based on the geometric data. Therefore, coding and decoding of the attribute data depend on the geometric data. The geometric data is more important than the attribute data.

Using video-based point cloud compression (Video-based Point Cloud Compression, V-PCC) as an example, a specific coding and decoding scheme is as follows: An encoder side projects original 3D point cloud data onto 2D space with different angles, and then processes the data by using a 2D video encoder, to obtain a plurality of types of data such as geometric data and attribute data. A geometric data flow corresponding to the geometric data and an attribute data flow corresponding to the attribute data are packaged as a V-PCC data flow. A decoder side decodes the V-PCC data flow to obtain the geometric data and the attribute data.

Then, that 3D expression is implemented by using data of a plurality of views (or left and right eye data of a single view) is described.

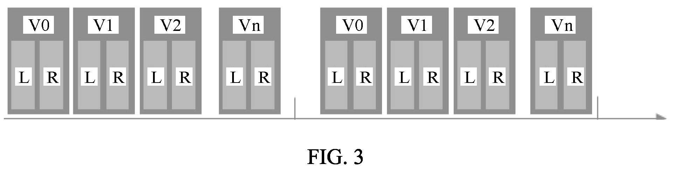

Using 3D multiview video coding (multiview video coding, MVC) as an example, in conventional 2D video coding, compression coding is usually performed with reference to a previous frame and a current frame and by using a correlation between the previous frame and the current frame. A 3D video may be coded by using a conventional 2D video coding technology for the left eye and the right eye. However, clearly, there is a high correlation between a left-eye image and a right-eye image. Therefore, in 3D MVC, for the right eye (left eye), coding is performed with reference to not only a previous frame and a current frame, but also the left eye (right eye). An example is shown in FIG. 3. FIG. 3 is a diagram of a 3D MVC media frame. Each frame in 3D MVC carries left-eye (L) video data and right-eye (R) video data. Generally, the right-eye video data is coded based on the left-eye video data. Therefore, the left-eye video data is more important than the right-eye video data.

In 3D MVC, each media frame may carry not only single-view left-eye and right-eye video data, but also multiview video data. When each media frame carries multiview video data, the media frame can be decoded correctly if video data of a part of views is transmitted successfully. For example, each media frame carries video data of nine views. The media frame can be decoded successfully if video data of a view 0 and video data of a current view are transmitted successfully. Therefore, the video data of the view 0 and the video data of the current view are more important than video data of other views.

It can be learned from the foregoing description that different data packets in a same media frame may have different importance or different QoS requirements. Correspondingly, a plurality of data packets included in one PDU set that carries the media frame may have different importance or different QoS requirements. Therefore, a new requirement is imposed on a transmission mechanism of the PDU set.

It should be noted that a plurality of data packets transmitted in a same PDU set mean that the plurality of data packets have information about a same internet protocol IP 5-tuple. The information about the IP 5-tuple includes a destination IP address, a destination port information, a source IP address, a source port information, and a protocol type. Similar to "the plurality of data packets transmitted in the same PDU set", a plurality of data packets transmitted in a same data flow have information about a same IP 5-tuple. Therefore, the plurality of data packets having the information about the same IP 5-tuple may be mapped to a same QoS flow for transmission. In other words, the plurality of data packets transmitted in the same data flow may also be mapped to a same QoS flow for transmission. The plurality of data packets transmitted in the same data flow may have differentiated QoS transmission requirements. Therefore, a new requirement is also imposed on a transmission mechanism of the data flow.

Based on this, embodiments of this application provide a protocol data unit set-based communication method. First information is sent, where the first information indicates that a plurality of data packets belonging to a same protocol data unit set PDU set are transmitted in at least two quality of service QoS flows. The plurality of data packets belonging to the same PDU set are sent, so that the plurality of data packets belonging to the same PDU set that are sent by an AF can be transmitted in the at least two QoS flows. The first information is sent, so that the plurality of data packets of the same PDU set are transmitted in the at least two QoS flows in a splitting manner, to satisfy different QoS requirements of different data packets in the same PDU set.

It may be understood that the protocol data unit set-based communication method provided in embodiments of this application may also be applied to a scenario in which a plurality of data packets of a same data flow are transmitted. A specific implementation is similar to that in the scenario in which the plurality of data packets of the same PDU set are transmitted. Details are not described. Specifically, the protocol data unit set-based communication method provided in embodiments of this application alternatively includes: An application function sends first information, where the first information indicates that a plurality of data packets belonging to a same data flow are transmitted in at least two quality of service QoS flows; and the application function sends the plurality of data packets belonging to the same data flow, so that the plurality of data packets belonging to the same PDU set that are sent by the AF are transmitted via the at least two QoS flows after being received by a receiver. The first information is sent, so that the plurality of data packets of the same data flow are transmitted in the at least two QoS flows in a splitting manner, to satisfy different QoS requirements of different data packets in the same data flow.

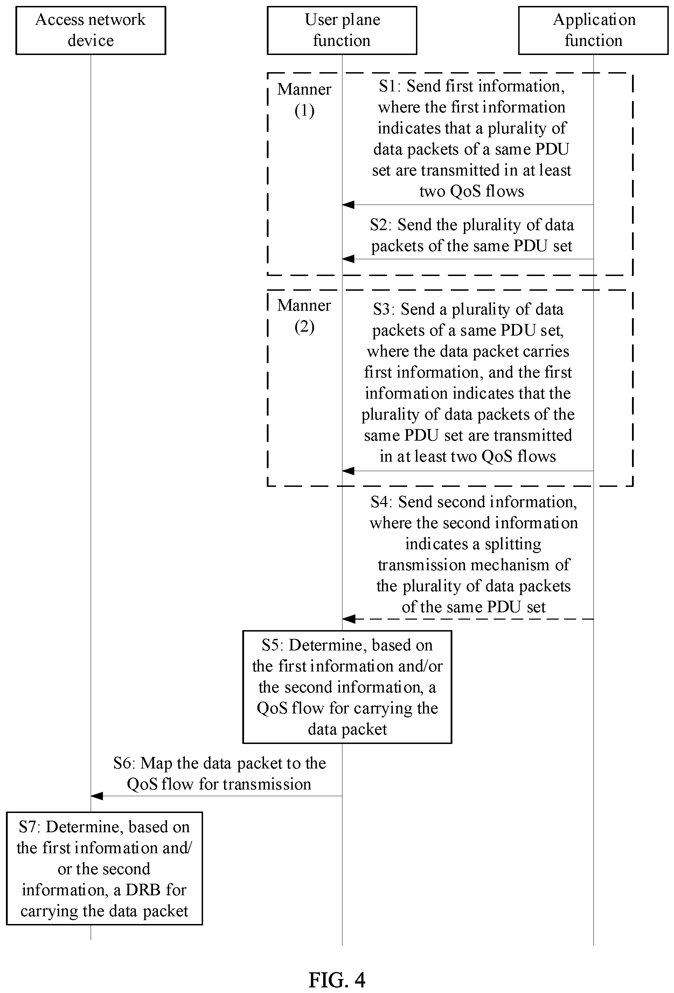

The following describes embodiments of this application with reference to the accompanying drawings. Refer to FIG. 4. FIG. 4 is a schematic flowchart of an embodiment of a protocol data unit set-based communication method according to an embodiment of this application. The protocol data unit set-based communication method provided in this embodiment of this application includes the following.

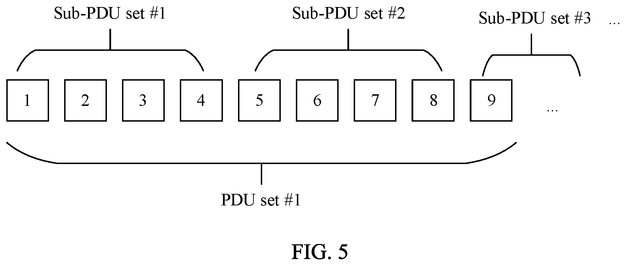

A sub-PDU set is first described. For ease of understanding, refer to FIG. 5. FIG. 5 is a diagram of a sub-PDU set according to an embodiment of this application. For example, the sub-PDU set provided in this embodiment of this application is a subset of a PDU set, the sub-PDU set includes at least one data packet, the data packet included in the sub-PDU set belongs to the PDU set, and the PDU set includes a plurality of sub-PDU sets. The sub-PDU set may also be referred to as a PDU set subset or another name. For example, if the PDU set is referred to as a media frame, a video frame, a data frame, or a frame, the plurality of sub-PDU sets included in the PDU set are referred to as sub-media frames, sub-video frames, sub-data frames, or subframes. This is not limited in this embodiment of this application.

There are a plurality of possible implementations for transmitting first information by an application function to a user plane function, including: Manner (1): the first information and a data packet are independent of each other; and Manner (2): the first information is carried in a data packet and sent along with a flow. Descriptions are separately provided below.

### Manner (1):

S1: The application function sends the first information to the user plane function, where the first information indicates that a plurality of data packets of a same PDU set are transmitted in at least two QoS flows.

In step S1, the application function sends the first information to the user plane function.

In a possible implementation, the first information indicates that the plurality of data packets belonging to the same PDU set are transmitted in the at least two QoS flows, to satisfy different QoS requirements of different data packets in the same PDU set.

For the first information, embodiments of this application provide one or more of the following possible implementations, which are separately described below:
Manner A: The first information includes importance information (which may be referred to as PDU importance information) of each of the plurality of data packets belonging to the same PDU set. Importance information of all of the plurality of data packets belonging to the same PDU set is in one-to-one correspondence with different QoS flows for carrying the data packets belonging to the same PDU set. For example, a PDU set #1 includes a data packet #1, a data packet #2, and a data packet #3. Importance information of the data packet #1 corresponds to a QoS flow #1, and the QoS flow #1 is used to carry the data packet #1. Importance information of the data packet #2 corresponds to a QoS flow #2, and the QoS flow #2 is used to carry the data packet #2. Importance information of the data packet #3 corresponds to a QoS flow #3, and the QoS flow #3 is used to carry the data packet #3.

Further, there are a plurality of possible implementations of the importance information, which are separately described below:
In a possible implementation, the importance information explicitly indicates importance of the data packet. For example, the importance information includes a field, a bit, or a value, and the field, the bit, or the value included in the importance information explicitly indicates the importance of the data packet associated with the importance information. For example, the importance information of the data packet #1 is "low", indicating that importance of the data packet #1 is low; and the importance information of the data packet #2 is "high", indicating that importance of the data packet #2 is high. For another example, the importance information of the data packet #1 is "0", indicating that importance of the data packet #1 is low; and the importance information of the data packet #2 is "1", indicating that importance of the data packet #2 is high. Further, the importance information may be carried in a header of the data packet.

In another possible implementation, the importance information implicitly indicates importance of the data packet.

For example, the importance information is represented by a coding scheme of the data packet, and the importance of the data packet is determined by using the coding scheme of the data packet. For example, a header of the data packet includes a type (type) field, and the type field indicates the coding scheme of the data packet. The type field may also be used as the importance information of the data packet. In other words, the importance of the data packet is determined by using the type field. For example, the plurality of data packets of the same PDU set belong to a same 3D media frame. The plurality of data packets of the same PDU set are coded through V-PCC. In the plurality of data packets of the same PDU set, a header of the data packet includes a network abstraction layer packet header (NAL header). The NAL header includes a type field, and the type field indicates that a type of the data packet is geometric data (for example, coordinates of point cloud data) or attribute data (for example, a color of point cloud data). The type field may be a "NAL_Unit_type" field. When the "NAL_Unit_type" field indicates that the data packet is geometric data, the "NAL_Unit_type" field indicates that the importance of the data packet is high. When the "NAL_Unit_type" field indicates that the data packet is attribute data, the "NAL_Unit_type" field indicates that the importance of the data packet is low.

For another example, the importance information is represented by a data type of the data packet, and the importance of the data packet is determined by using the data type of the data packet. For example, a header of the data packet includes a type (type) field, and the type field indicates the data type (or a data attribute) of the data packet. The type field may also be used as the importance information of the data packet. In other words, the importance of the data packet is determined by using the type field. For example, the plurality of data packets of the same PDU set belong to a same 3D media frame. The 3D media frame includes left-eye video data (data packet #1) and right-eye video data (data packet #2). A field, for example, a type field, of the data packet #1 indicates that data carried in the data packet #1 is the left-eye video data. A field, for example, a type field, of the data packet #2 indicates that data carried in the data packet #2 is the right-eye video data. When the type field indicates that the data packet carries the left-eye video data, the type field indicates that the importance of the data packet is high. When the type field indicates that the data packet carries the right-eye video data, the type field indicates that the importance of the data packet is low.

It should be noted that the importance information may be at a granularity of a data packet, a sub-PDU set, or a data flow, for example, may be sub-PDU set importance information (sub-PDU SET importance information), or data flow importance information. For example, the PDU set includes a sub-PDU set #1, a sub-PDU set #2, and a sub-PDU set #3. Importance information of any data packet in the sub-PDU set #1 indicates that importance of the data packet in the sub-PDU set #1 is high, importance information of any data packet in the sub-PDU set #2 indicates that importance of the data packet in the sub-PDU set #2 is medium, and importance information of any data packet in the sub-PDU set #3 indicates that importance of the data packet in the sub-PDU set #3 is low.

It should be noted that the importance information in Manner A may be replaced with other information, including but not limited to priority information, transmission delay information, packet error rate information, packet loss rate information, or the like.

Manner B: The first information includes an association relationship between sub-PDU sets to which the data packets belonging to the same PDU set belong and QoS flows for carrying the sub-PDU sets. For example, a first PDU set is used as an example for description. The first PDU set includes a first sub-PDU set, a second sub-PDU set, and a third sub-PDU set. A QoS flow for carrying a data packet of the first sub-PDU set is a QoS flow #1, a QoS flow for carrying a data packet of the second sub-PDU set is a QoS flow #2, and a QoS flow for carrying a data packet of the third sub-PDU set is a QoS flow #3. The association relationship between the sub-PDU sets to which the data packets belonging to the same PDU set belong and the QoS flows for carrying the sub-PDU sets is shown in Table 1.

**Table 1**

| Sub-PDU set | QoS flow | QoS flow identifier (QFI) |
|---|---|---|
| First sub-PDU set | QoS flow #1 | QFI #1 |
| Second sub-PDU set | QoS flow #2 | QFI #2 |
| Third sub-PDU set | QoS flow #3 | QFI #3 |

For example, with reference to Table 1, the first sub-PDU set includes a data packet #1, and first information corresponding to the data packet #1 includes an association relationship between the first sub-PDU set and the QoS flow #1 for carrying the first sub-PDU set. It may be determined, based on the first information, that the data packet #1 is transmitted in the QoS flow #1.

Optionally, the first information includes a QoS flow identifier corresponding to the sub-PDU set to which the data packet belongs. With reference to Table 1, for example, the first PDU set includes the data packet #1, and a sub-PDU set to which the data packet #1 belongs is the first sub-PDU set. In this case, the first information corresponding to the data packet #1 may be the QFI #1.

Manner C: The first information includes an identity of a sub-PDU set to which each of the plurality of data packets belonging to the same PDU set belongs, which is alternatively referred to as a sub-PDU set sequence number.

For the identity of the sub-PDU set to which the data packet belongs (for example, a sub-PDU set sequence number Sub-PDU Set SN (sequence number)), for example, a first PDU set is used as an example for description. The first PDU set includes a first sub-PDU set, a second sub-PDU set, and a third sub-PDU set. An identity of the first sub-PDU set may be "1", an identity of the second sub-PDU set may be "2", and an identity of the third sub-PDU set may be "3". The first PDU set includes a data packet #1, a data packet #2, and a data packet #3. A sub-PDU set to which the data packet #1 belongs is the first sub-PDU set, and the data packet #1 includes the identity "1" of the first sub-PDU set. A sub-PDU set to which the data packet #2 belongs is the second sub-PDU set, and the data packet #1 includes the identity "2" of the second sub-PDU set. A sub-PDU set to which the data packet #3 belongs is the third sub-PDU set, and the data packet #3 includes the identity "3" of the third sub-PDU set.

Manner D: The first information includes a start packet identifier of a sub-PDU set (Sub-PDU Set start indication), where the start packet identifier of the sub-PDU set indicates a 1^{st} data packet in a plurality of data packets included in the sub-PDU set. For example, a sub-PDU set #1 includes a data packet #1, a data packet #2, and a data packet #3. In an example, the data packet #1 includes a start packet identifier of the sub-PDU set, and the start packet identifier of the sub-PDU set indicates that the data packet #1 is a 1^{st} data packet in a plurality of data packets included in the sub-PDU set #1. For example, a packet header of the data packet #1 carries the start packet identifier.

In another example, a PDU set-related data packet sequence number (PDU SN) of each data packet in the sub-PDU set includes one piece of corresponding identification information, and the identification information indicates a position of the data packet in the plurality of data packets of the sub-PDU set. For example, identification information of a data packet sequence number of the data packet #1 is set to "1", the identification information "1" indicates that the data packet #1 is the 1^{st} data packet in the sub-PDU set #1, and the identification information "1" is used as a start packet identifier. For another example, as shown in Table 2, that a sub-PDU set #1 includes a data packet #1, a data packet #2, a data packet #3, and a data packet #4, and a sub-PDU set #2 includes a data packet #5, a data packet #6, a data packet #7, a data packet #8, and a data packet 9 is used as an example.

**Table 2**

| Sub-PDU set | Data packet | PDU set-related data packet sequence number | Identification information corresponding to the data packet sequence number |
|---|---|---|---|
| Sub-PDU set #1 | Data packet #1 | 1 (indicating that the data packet #1 is the 1^{st} data packet in the PDU set, where the PDU set includes the sub-PDU set #1 and the sub-PDU set #2) | 1 (indicating that the data packet #1 is a start packet in the sub-PDU set #1) |
| | Data packet #2 | 2 | 0 |
| | Data packet #3 | 3 | 0 |
| | Data packet #4 | 4 | 2 (indicating that the data packet #4 is an end packet in the sub-PDU set #1) |
| Sub-PDU set #2 | Data packet #5 | 5 | 1 (indicating that the data packet #5 is a start packet in the sub-PDU set #2) |
| | Data packet #6 | 6 | 0 |
| | Data packet #7 | 7 | 0 |
| | Data packet #8 | 8 | 0 |
| | Data packet #9 | 9 (indicating that the data packet #9 is the 9^{th} data packet in the PDU set, where the PDU set includes the sub-PDU set #1 and the sub-PDU set #2) | 2 (indicating that the data packet #9 is an end packet in the sub-PDU set #2) |

Manner E: The first information includes an end packet identifier of a sub-PDU set (Sub-PDU Set end indication), where the end packet identifier of the sub-PDU set indicates a last data packet in a plurality of data packets included in the sub-PDU set. For example, a first PDU set includes a data packet #1, a data packet #2, a data packet #3, and a data packet #4. In an example, the data packet #4 includes an end packet identifier of a sub-PDU set, and the end packet identifier of the sub-PDU set indicates that the data packet #4 is a last data packet in a plurality of data packets included in the sub-PDU set #1. For example, a packet header of the data packet #3 carries the end packet identifier.

For example, the end packet identifier may be identification information corresponding to a data packet sequence number (PDU SN) of the data packet. For example, a sub-PDU set #1 includes a data packet #1, a data packet #2, a data packet #3, and a data packet #4. For example, as shown in the foregoing Table 1, a PDU SN of the data packet #4 is 4, and identification information of the PDU SN 4 is set to "2", indicating that the data packet #4 is an end packet in the sub-PDU set #1.

Manner F: The first information includes a quantity of data packet bits of the sub-PDU set (Sub-PDU Set Size), where the quantity of data packet bits of the sub-PDU set indicates a size of the data packet included in the sub-PDU set. For example, a first PDU set includes a data packet #1, a data packet #2, a data packet #3, and a data packet #4. The first PDU set includes a first sub-PDU set and a second sub-PDU set, data packets belonging to the first sub-PDU set include the data packet #1 and the data packet #2, and data packets belonging to the second sub-PDU set include the data packet #3 and the data packet #4. A quantity of data packet bits of the first sub-PDU set is 500 bits (bit), and a quantity of data packet bits of the second sub-PDU set is 400 bits. First information corresponding to the data packet #1 is 500 bits, and the first information indicates that a size of a sub-PDU set #1 to which the data packet #1 belongs is 500 bits. First information corresponding to the data packet #2 is 500 bits, and the first information indicates that the size of the sub-PDU set #1 to which the data packet #2 belongs is 500 bits. First information corresponding to the data packet #3 is 400 bits, and the first information indicates that a size of a sub-PDU set #2 to which the data packet #3 belongs is 400 bits. First information corresponding to the data packet #4 is 400 bits, and the first information indicates that the size of the sub-PDU set #2 to which the data packet #4 belongs is 400 bits.

In an example, quantities of data packet bits of different sub-PDU sets in a same PDU set may be different. Therefore, a QoS flow for carrying a data packet of a sub-PDU set may be determined based on a quantity of data packet bits of the sub-PDU set. For example, a sub-PDU set with relatively high importance in a same PDU set includes a relatively large amount of data. Therefore, a quantity of data packet bits of the sub-PDU set with the relatively high importance is relatively large. A sub-PDU set with relatively low importance in a same PDU set includes a relatively small amount of data. Therefore, a quantity of data packet bits of the sub-PDU set with the relatively low importance is relatively small. A QoS flow with a relatively high priority may be allocated to a data packet of the sub-PDU set with a relatively large quantity of data packet bits of the sub-PDU set, and a QoS flow with a relatively low priority may be allocated to a data packet of the sub-PDU set with a relatively small quantity of data packet bits of the sub-PDU set.

Manner G: The first information includes a data packet sequence number of the sub-PDU set, where the data packet sequence number of the sub-PDU set indicates a sequence number, in the sub-PDU set, of the data packet included in the sub-PDU set. For example, a first PDU set includes a data packet #1, a data packet #2, a data packet #3, and a data packet #4. The first PDU set includes a first sub-PDU set and a second sub-PDU set, data packets belonging to the first sub-PDU set include the data packet #1 and the data packet #2, and data packets belonging to the second sub-PDU set include the data packet #3 and the data packet #4. A sequence number of the data packet #1 in the first sub-PDU set is 1, a sequence number of the data packet #2 in the first sub-PDU set is 2, a sequence number of the data packet #3 in the second sub-PDU set is 1, and a sequence number of the data packet #4 in the second sub-PDU set is 2.

In an example, the data packets in the sub-PDU set are scheduled in sequence by using the data packet sequence number of the sub-PDU set. For example, the plurality of data packets of the sub-PDU set are sorted based on the data packet sequence number of the sub-PDU set, or the plurality of data packets of the sub-PDU set are sequentially sent based on the data packet sequence number of the sub-PDU set.

In another example, the data packet further includes a PDU set-related sequence number, where the PDU set is a PDU set to which the data packet belongs, and the PDU set-related sequence number indicates a ranking of the data packet in a plurality of data packets included in the PDU set. For example, if a data packet #5 is a 5^{th} data packet in a PDU set #1, a PDU set-related sequence number of the data packet #5 is "5". If the data packet #5 is a 1^{st} data packet in a sub-PDU set #2, a sub-PDU set sequence number of the data packet #5 is "1 ", and the PDU set #1 includes the sub-PDU set #2. It is determined, based on the PDU set-related sequence number "5" and the sub-PDU set sequence number "1" of the data packet #5, that the data packet #5 is a data packet of a sub-PDU set, and the data packet #5 needs to be transmitted in a splitting manner. A QoS flow for carrying the data packet #5 is determined based on other first information and/or second information related to the data packet #5.

For ease of description, the first information in Manner B to Manner G may also be referred to as sub-PDU set information (sub-PDU SET information).

In another possible implementation, the sub-PDU set information (the first information in Manner B to Manner G) may alternatively be information allocated to the data packet after the user plane function determines the sub-PDU set to which the data packet belongs. In this implementation, the first information sent by the application function includes only Manner A, and does not include Manner B to Manner G.

In another possible implementation, the first information indicates that the plurality of data packets of the same PDU set are transmitted in at least one QoS flow according to at least two transmission rules. The transmission rule includes but is not limited to a transmission priority, a retransmission priority, or the like.

For example, the transmission priority indicates which data packets in a plurality of data packets carried in a same QoS flow are preferentially sent and which data packets are sent later. For example, a plurality of data packets included in a first PDU set are carried in a first QoS flow. The first PDU set includes a first sub-PDU set and a second sub-PDU set. A transmission priority of a data packet in the first sub-PDU set is higher than a transmission priority of a data packet in the second sub-PDU set.

For example, the retransmission priority indicates which data packets in a plurality of data packets carried in a same QoS flow are preferentially retransmitted when a packet loss occurs, and which data packets are retransmitted later when the packet loss occurs. For example, a plurality of data packets included in a first PDU set are carried in a first QoS flow. The first PDU set includes a first sub-PDU set and a second sub-PDU set. A retransmission priority of a data packet in the first sub-PDU set is higher than a retransmission priority of a data packet in the second sub-PDU set.

For example, the transmission rule of the data packet is determined by using importance information of the data packet. For example, a plurality of data packets included in a first PDU set are carried in a first QoS flow. The first PDU set includes a first sub-PDU set and a second sub-PDU set. Importance information of a data packet in the first sub-PDU set indicates that the data packet in the first sub-PDU set has high importance, and importance information of a data packet in the second sub-PDU set indicates that the data packet in the second sub-PDU set has low importance. It is determined, based on the importance information, that a transmission priority of the first sub-PDU set is higher than a transmission priority of the data packet in the second sub-PDU set.

In a possible example, sending the first information by the AF and sending the data packet by the AF are independent of each other. For example, the AF sends protocol description (protocol description) information, where the protocol description information includes any one or more of the foregoing first information.

For example, the first information may also be referred to as differentiated information of a data packet or a data flow.

Optionally, in addition to sending the first information to the user plane function, the application function may further send the first information to another network function (or network element or device). For example, the application function sends the first information to a PCF. For another example, the application function sends the first information to an SMF. For another example, the application function sends the first information to a RAN.

Correspondingly, that the user plane function receives the first information from the application function may be that the user plane function directly receives the first information from the application function, or may be that the user plane function indirectly receives the first information through another network function (or network element or device). This is not limited in this embodiment of this application.

It should be noted that, that the application function sends the first information to the user plane function is merely an example. The application function may directly send the first information to the user plane function, or the application function may send the first information to the user plane function through another network function or network element. In addition, the application function may further send the first information to another network function, network element, or device. This is not limited in this embodiment of this application.

S2: The application function sends the plurality of data packets of the same PDU set to the user plane function.

It should be noted that an execution sequence of step S1 and step S2 is not limited in this embodiment of this application. Step S1 may be performed before step S2, or step S2 may be performed before step S1, or step S1 and step S2 may be performed at the same time.

### Manner (2):

S3: The application function sends a plurality of data packets of a same PDU set to the user plane function, where the data packet carries the first information, and the first information indicates that the plurality of data packets of the same PDU set are transmitted in at least two QoS flows.

In step S3, the application function sends the plurality of data packets of the same PDU set to the user plane function, where the data packet carries the first information. For the first information, refer to step S1. Details are not described herein again.

In a possible example, when the AF sends the plurality of data packets of the PDU set, any one or more of the plurality of data packets carry first information corresponding to the data packets. It should be noted that the first information carried in the data packet may be any one or more of the foregoing first information in Manner A to Manner G in step S1. The first information carried in the data packet may include only first information related to the data packet. For example, a data packet #1 carries importance information of the data packet #1, and a data packet #2 carries importance information of the data packet #2. For another example, a data packet #1, a data packet #2, and a data packet #3 belong to a sub-PDU set #1, and the data packet #1, the data packet #2, and the data packet #3 carry an association relationship between a sub-PDU set #1 and a QoS flow #1. A data packet #4, a data packet #5, and a data packet #6 belong to a sub-PDU set #2, and the data packet #4, the data packet #5, and the data packet #6 carry an association relationship between the sub-PDU set #2 and a QoS flow #2. In addition to the first information related to the data packet, the first information carried in the data packet may also include first information related to another data packet. This is not limited in this embodiment of this application.

For example, the data packet carries importance information corresponding to the data packet. It should be noted that when data carried in the PDU set includes a media frame, first information of a sub-PDU set in the PDU set may also be referred to as identification information of intra-frame data.

Further, the data packet may carry the first information in a plurality of manners, which are separately described below.

In a possible implementation, a header (or a packet header) of the data packet carries the first information. For example, an extension packet header (extension header) of the data packet carries the first information. For another example, a general packet radio service tunneling protocol-user plane (general packet radio service tunneling protocol-user plane, GTP-U) packet header of the data packet carries the first information. For another example, a type field of a network abstraction layer packet header NAL header of the data packet carries the first information. For another example, a newly added packet header of the data packet carries the first information.

In another possible implementation, a payload field of the data packet carries the first information, for example, a payload field.

It should be noted that, one of Manner (1) and Manner (2) may be selected for implementation, or different manners may be used for different data packets. For example, the AF uses Manner (1) for a data packet of a first PDU set, and the first information and the data packet of the first PDU set are sent independently of each other. The AF uses Manner (2) for a data packet of a second PDU set, and the data packet of the second PDU set carries the first information.

S4: The application function sends second information to the user plane function, where the second information indicates a splitting transmission mechanism of the plurality of data packets of the same PDU set.

Step S4 is an optional step. When step S4 is not performed, the user plane function may be preconfigured with the second information, and then the user plane function determines, based on the preconfigured second information and the first information corresponding to the data packet, a QoS flow for carrying the data packet. Alternatively, the user plane function may determine, based on only the first information, a QoS flow for carrying the data packet.

In step S4, the application function sends the second information to the user plane function, where the second information indicates the splitting transmission mechanism of the plurality of data packets of the same PDU set. It should be noted that an execution sequence of step S4 and the foregoing step S1 and step S2 or the foregoing step S3 is not limited. Step S4 may be performed before step S1 and step S2; or step S1 and step S2 may be performed before step S4. Step S4 may be performed before step S3; or step S3 may be performed before step S4.

For the second information, embodiments of this application provide one or more of the following possible implementations, which are separately described below:
Manner A: The second information includes an association relationship between the importance information of the data packets belonging to the same PDU set and QoS flows. An example is shown in Table 3.

**Table 3**

| Importance information | QoS flow |
|---|---|
| High importance | QoS flow #1, QoS flow #3, QoS flow #5, ... |
| Low importance | QoS flow #2, QoS flow #4, QoS flow #6, ... |
| Geometric data (coding scheme) | QoS flow #1, QoS flow #3, QoS flow #5, ... |
| Attribute data (coding scheme) | QoS flow #2, QoS flow #4, QoS flow #6, ... |
| Left-eye video data (data type) | QoS flow #1, QoS flow #3, QoS flow #5, ... |
| Right-eye video data (data type) | QoS flow #2, QoS flow #4, QoS flow #6, ... |

Manner B: The second information includes an association relationship between the importance information of the data packets belonging to the same PDU set and QoS requirements. An example is shown in Table 4.

**Table 4**

| Importance information | QoS requirement |
|---|---|
| High importance | A bandwidth, a delay, a data loss, and/or a jitter satisfy/satisfies a first condition |
| Low importance | A bandwidth, a delay, a data loss, and/or a jitter satisfy/satisfies a second condition |
| Geometric data (coding scheme) | A bandwidth, a delay, a data loss, and/or a jitter satisfy/satisfies a first condition |
| Attribute data (coding scheme) | A bandwidth, a delay, a data loss, and/or a jitter satisfy/satisfies a second condition |
| Left-eye video data (data type) | A bandwidth, a delay, a data loss, and/or a jitter satisfy/satisfies a first condition |
| Right-eye video data (data type) | A bandwidth, a delay, a data loss, and/or a jitter satisfy/satisfies a second condition |

For example, in Table 4, the second condition is looser than the first condition. For example, the second condition requires that a delay be less than 10 milliseconds, and the first condition requires that a delay be less than 2 milliseconds.

Manner C: The second information includes an association relationship between the importance information of the data packets belonging to the same PDU set and QoS parameters (or referred to as parameters of QoS flows). An example is shown in Table 5.

**Table 5**

| Importance information | QoS parameter |
|---|---|
| High importance | QoS parameter #1 |
| Low importance | QoS parameter #2 |
| Geometric data (coding scheme) | QoS parameter #1 |
| Attribute data (coding scheme) | QoS parameter #2 |
| Left-eye video data (data type) | QoS parameter #1 |
| Right-eye video data (data type) | QoS parameter #2 |

The QoS parameter includes but is not limited to: a guaranteed flow bit rate (guaranteed flow bit rate, GFBR), a maximum flow bit rate (maximum flow bit rate, MFBR), notification control (notification control), a reflective QoS attribute (reflective QoS attribute, RQA), and a maximum packet loss rate-uplink and downlink (maximum packet loss rate-uplink and downlink).

Manner D: The second information includes splitting transmission indication information, where the splitting transmission indication information indicates to map, based on the first information, the plurality of data packets belonging to the same PDU set to a plurality of QoS flows for transmission. For example, the splitting transmission indication information is associated with a first PDU set, a second PDU set, and a fourth PDU set. The splitting transmission indication information indicates to separately map, based on the first information, a plurality of data packets of the first PDU set, the second PDU set, and the fourth PDU set to a plurality of QoS flows for transmission. Data packets of another PDU set, for example, a plurality of data packets of a third PDU set, are mapped to one QoS flow for transmission according to an original transmission method. For example, the splitting transmission indication information includes an identity or a sequence number of the PDU set.

Optionally, the splitting transmission indication information may further include a data packet filtering rule and a corresponding QoS flow. Which data packets in the same PDU set are transmitted via a high-priority QoS flow and which data packets are transmitted via a low-priority QoS flow are determined according to the data packet filtering rule.

Manner F: The second information includes a data packet detection rule (Packet Forwarding Model, PDR) for a plurality of sub-PDU sets belonging to the same PDU set.

It should be noted that one data packet detection rule may be specific to one or more data flows, and one or more PDU sets are transmitted in the data flow. For example, one data packet detection rule is specific to a data packet transmitted in one data flow, and the data flow may carry one or more PDU sets.

Optionally, one data packet detection rule may be specific to one PDU set. For example, sub-PDU sets to which a plurality of data packets included in one PDU set belong may be determined according to one PDR.

Optionally, one data packet detection rule may be specific to one sub-PDU set. For example, sub-PDU sets to which a plurality of data packets included in one PDU set belong may be determined according to a plurality of PDRs, and each PDR corresponds to one sub-PDU set.

Optionally, the data packet detection rule may further include the splitting transmission indication information in Manner D, or other second information.

Manner G: The second information includes a QoS parameter of each of a plurality of sub-PDU sets belonging to the same PDU set, where the QoS parameter of each sub-PDU set corresponds to a parameter of a QoS flow for carrying the sub-PDU set. The parameter of the QoS flow includes but is not limited to: a guaranteed flow bit rate (guaranteed flow bit rate, GFBR), a maximum flow bit rate (maximum flow bit rate, MFBR), notification control (notification control), a reflective QoS attribute (reflective QoS attribute, RQA), and a maximum packet loss rate-uplink and downlink (maximum packet loss rate-uplink and downlink). Further, optionally, the QoS parameter of the sub-PDU set (sub-PDU SET) includes any one or more of the following: a sub-PDU set delay budget sub-PDU set delay budget, a sub-PDU set error rate sub-PDU set error rate, or sub-PDU set integrated handling information sub-PDU set integrated handling information.

Manner H: The second information includes QoS requirements of a plurality of sub-PDU sets belonging to the same PDU set, where a QoS requirement of each sub-PDU set indicates information about a requirement for a QoS flow for carrying a data packet of the sub-PDU set. The QoS requirement includes but is not limited to: a bandwidth, a delay, a data loss, or a jitter.

In a possible implementation, the second information may be configured by the application function for the user plane function. In another possible implementation, the second information may be alternatively preconfigured for the user plane function.

It should be noted that, that the application function sends the second information to the user plane function is merely an example. The application function may directly send the second information to the user plane function, or the application function may send the second information to the user plane function through another network function or network element. The application function may further send the second information to another network function (or network element or device). For example, the application function sends the second information to a PCF. For another example, the application function sends the second information to an SMF. For another example, the application function sends the second information to a RAN.

Correspondingly, that the user plane function receives the second information from the application function may be that the user plane function directly receives the second information from the application function, or may be that the user plane function indirectly receives the second information through another network function (or network element or device). This is not limited in this embodiment of this application.

S5: The user plane function determines, based on the first information and/or the second information, a QoS flow for carrying the data packet.

In step S5, in a possible implementation, the user plane function determines, based on the first information, the QoS flow for carrying the data packet.

In an example, the user plane function determines importance of a data packet based on importance information of the data packet, and then determines, based on the importance, a QoS flow corresponding to the data packet. For example, in the same PDU set, a QoS flow with a higher priority is used for a data packet with higher importance, and a QoS flow with a lower priority is used for a data packet with lower importance. For another example, in the same PDU set, a QoS flow with a higher priority is used for a data packet carrying geometric data, and a QoS flow with a lower priority is used for a data packet carrying attribute data.

It should be noted that a high-priority QoS flow in this embodiment of this application may be a QoS flow with a relatively high bandwidth, a relatively low delay, and/or a relatively low packet loss rate, and a low-priority QoS flow in this embodiment of this application may be a QoS flow with a relatively low bandwidth, a relatively high delay, and/or a relatively high packet loss rate.

In another example, the user plane function determines, based on an association relationship between a sub-PDU set to which a data packet belongs and a QoS flow for carrying the sub-PDU set, a QoS flow corresponding to the data packet. For example, after determining, based on the first information related to the data packet, the sub-PDU set to which the data packet belongs, the user plane function determines, based on the association relationship, the QoS flow for carrying the sub-PDU set. Then, the QoS flow is determined as the QoS flow for carrying the data packet.

In another possible implementation, the user plane function determines, based on the first information and the second information, the QoS flow for carrying the data packet.

In an example, the first information includes importance information of each of the plurality of data packets belonging to the same PDU set, and the second information includes an association relationship between the importance information of the data packet and a QoS flow. The QoS flow associated with the importance information of the data packet is determined based on the importance information of each of the plurality of data packets belonging to the same PDU set and the association relationship between the importance information of the data packet and the QoS flow. For example, it is determined, based on the importance information, that a data packet #1 carries geometric data, and then it is determined, based on the association relationship between the importance information and the QoS flow, that a QoS flow for carrying the geometric data is a high-priority QoS flow. Finally, a QoS flow for carrying the data packet #1 is determined from the high-priority QoS flow. For another example, it is determined, based on the importance information, that a data packet #2 carries attribute data, and then it is determined, based on the association relationship between the importance information and the QoS flow, that a QoS flow for carrying the attribute data is a low-priority QoS flow. Finally, a QoS flow for carrying the data packet #2 is determined from the low-priority QoS flow.

In another example, the first information includes importance information of each of the plurality of data packets belonging to the same PDU set. Then, a QoS flow corresponding to the importance information is determined based on the second information. For example, a QoS requirement corresponding to the importance information is determined based on the second information, and then a QoS flow that satisfies the QoS requirement is determined as the QoS flow for carrying the data packet. For another example, a QoS parameter corresponding to the importance information is determined based on the second information, and then the QoS flow for carrying the data packet is configured based on the QoS parameter.

In another example, after the sub-PDU set to which the data packet belongs is determined based on the first information (for example, information about the sub-PDU set), a QoS flow for carrying the sub-PDU set is determined based on the second information. Then, the QoS flow is selected as the QoS flow for carrying the data packet. For example, after the sub-PDU set to which the data packet belongs is determined, the QoS flow, a QoS parameter, or a QoS requirement corresponding to the sub-PDU set is determined based on the second information. Then, the QoS flow for carrying the data packet is determined based on the QoS flow, the QoS parameter, or the QoS requirement corresponding to the sub-PDU set.

In another possible implementation, the user plane function determines, based on the second information, the QoS flow for carrying the data packet.

In an example, the second information includes a data packet detection rule for the plurality of sub-PDU sets belonging to the same PDU set. Detection is performed on data of the data packet according to the data packet detection rule for the plurality of sub-PDU sets belonging to the same PDU set, to determine the sub-PDU set to which the data packet belongs. Then, a QoS flow for carrying the sub-PDU set is determined based on the sub-PDU set to which the data packet belongs. Then, the QoS flow is used as the QoS flow for carrying the data packet.

In another example, the second information includes splitting transmission indication information, where the splitting transmission indication information indicates to map, based on the first information, the plurality of data packets belonging to the same PDU set to a plurality of QoS flows for transmission. Specific QoS flows to which the plurality of data packets of the same PDU set are separately mapped are determined based on the splitting transmission indication information.

Optionally, after the user plane function determines, based on the second information, the sub-PDU set to which the data packet belongs, the user plane function allocates the first information to the data packet. The first information may further indicate the sub-PDU set to which the data packet belongs. The first information allocated by the user plane function to the data packet is any one or more of Manner B to Manner G in the foregoing step S1. Details are not described herein again. Further, optionally, after allocating the first information to the data packet, the user plane function pads the data packet with the first information, and maps the data packet padded with the first information to a corresponding QoS flow for transmission.

S6: The user plane function maps the data packet to the QoS flow for transmission.

In step S6, after determining the QoS flow for carrying the data packet, the user plane function maps the data packet to the QoS flow for transmission. In a possible implementation, the user plane function adds, to the data packet, a QoS flow identifier (QFI) of the QoS flow for carrying the data packet, so that the data packet can be transmitted via the QoS flow.

For example, a first PDU set includes a plurality of data packets, and the first PDU set carries data of a 3D media frame. The first PDU set includes a first sub-PDU set and a second sub-PDU set, the first sub-PDU set carries geometric data in the 3D media frame, and the second sub-PDU set carries attribute data in the 3D media frame. One or more data packets included in the first sub-PDU set are mapped to a high-priority QoS flow for transmission, and one or more data packets included in the second sub-PDU set are mapped to a low-priority QoS flow for transmission. Splitting transmission of the plurality of data packets of the same PDU set is implemented by using the foregoing method.

Optionally, before the user plane function maps the data packet to the QoS flow for transmission, the user plane function adds the first information to the data packet, for example, adds sub-PDU set information of the sub-PDU set to which the data packet belongs (referring to the first information in Manner B to Manner G in the foregoing step S1), and then the user plane function maps the data packet to which the first information is added to the QoS flow for transmission. For example, the user plane function adds the first information to a GTP-U packet header of the data packet, and then maps the data packet to which the first information is added to the QoS flow for transmission.

S7: An access network device determines, based on the first information and/or the second information, a DRB for carrying the data packet.

In step S7, the access network device may obtain the first information and/or the second information in a plurality of manners. For example, the access network device directly obtains the first information and/or the second information from the application function. For another example, the access network device obtains the first information and/or the second information through an SMF. This is not limited in this embodiment of this application.

In an example, after receiving a data packet from the user plane function, the access network device determines, based on first information (for example, first information carried in the data packet) and/or second information corresponding to the data packet, a sub-PDU set to which the data packet belongs. Then, a QoS parameter corresponding to the sub-PDU set (for example, a QoS profile (profile) obtained from an SMF, where the QoS profile includes the QoS parameter corresponding to the sub-PDU set) is determined based on the second information. Then, a DRB that satisfies a requirement of the QoS parameter is determined based on the QoS parameter, and the DRB is determined as a DRB for carrying the data packet.

Optionally, the access network device determines a retransmission mechanism of the data packet based on the first information and/or the second information. The retransmission mechanism may indicate which data packets in the same PDU set need to be retransmitted when a packet loss occurs, and which data packets do not need to be retransmitted when the packet loss occurs. The retransmission mechanism may further indicate a quantity of times of retransmitting specific data packets in the same PDU set when the packet loss occurs.

Optionally, the access network device determines a transmission mechanism of the data packet based on the first information and/or the second information. The retransmission mechanism may indicate which data packets in the same PDU set are preferentially transmitted.

In this embodiment of this application, splitting transmission of the plurality of data packets in the same PDU set in the at least two QoS flows is implemented by using the first information and/or the second information, the first information indicates that the plurality of data packets belonging to the same protocol data unit set PDU set are transmitted in the at least two quality of service QoS flows, and the second information indicates the splitting transmission mechanism of the plurality of data packets in the same PDU set. Thus, different QoS requirements of different data packets in the same PDU set are satisfied. For example, if data carried by the same PDU set is data of a 3D media frame, splitting transmission of geometric data and attribute data in the 3D media frame can be implemented by using the first information. For another example, splitting transmission of left-eye video data and right-eye video data in a 3D media frame can be implemented by using the first information. For another example, splitting transmission of video data of different views in a 3D media frame can be implemented by using the first information. In this way, service requirements of a plurality of services are satisfied, data transmission quality is improved, and user experience is enhanced.

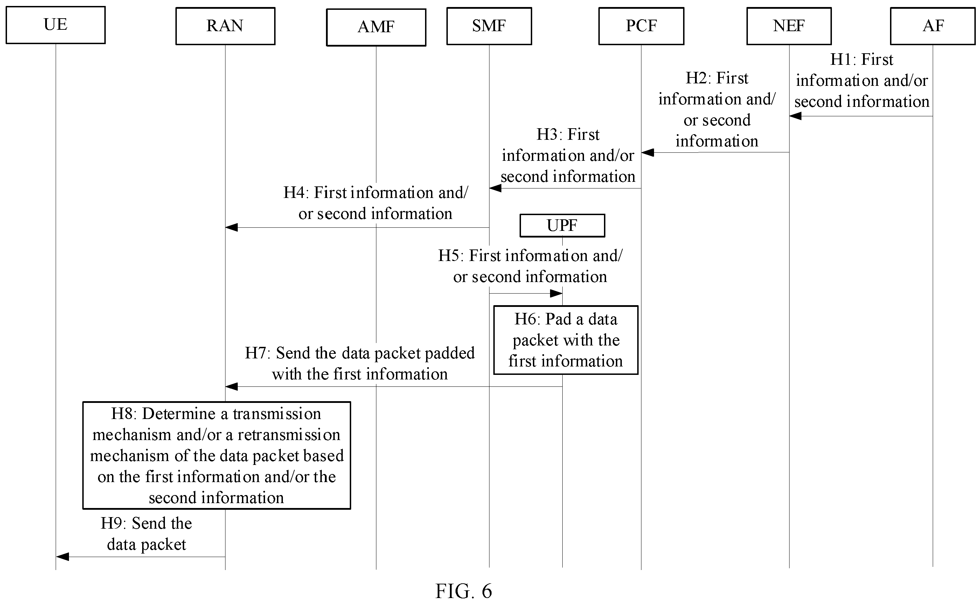

With reference to the foregoing embodiments, the following describes another embodiment of this application. Refer to FIG. 6. FIG. 6 is a schematic flowchart of another embodiment of a protocol data unit set-based communication method according to an embodiment of this application. The protocol data unit set-based communication method provided in this embodiment of this application further includes the following.

H1: An AF sends first information and/or second information to an NEF.

In step H1, the AF sends, to the NEF, an "Nnef_AFsessionWithQoS Create request" message carrying the first information. The "Nnef_AFsessionWithQoS Create request" is merely an example of sending the first information and/or the second information. In a possible manner, the first information and/or the second information may be alternatively carried in an "Nnef_AFsessionWithQoS update request" message. The following embodiment is described based on the "Nnef_AFsessionWithQoS Create request" message.

It should be noted that the AF may send the first information and the second information to the NEF by using different messages. Alternatively, the AF may send only the first information or the second information to the NEF. This is not limited in this embodiment of this application.

H2: The NEF sends the first information and/or the second information to a PCF.

In step H2, the NEF performs an authorization (authorization) operation based on the "Nnef_AFsessionWithQoS Create request" message. After successful authorization, the NEF sends the first information and/or the second information to the PCF. For example, the NEF sends "Npcf_PolicyAuthorization Create request" to the PCF, where the "Npcf_PolicyAuthorization Create request" message carries the first information and/or the second information.

H3: The PCF sends the first information and/or the second information to an SMF.

In step H3, the PCF generates a corresponding PCC rule based on the "NpcC_PolicyAuthorization Create request" message, where the PCC rule indicates the first information and/or the second information. Then, the PCF sends the first information and/or the second information to the SMF. For example, the PCF sends an "SM Policy Association Establishment" message to the SMF, where the message carries the PCC rule, and the PCC rule indicates the first information and/or the second information.

For example, the PCC rule indicates that a plurality of data packets belonging to a same PDU set are transmitted in at least two quality of service QoS flows.

H4: The SMF sends the first information and/or the second information to a RAN.

In step H4, the SMF sends the first information and/or the second information to the RAN through an AMF in response to the "SM Policy Association Establishment" message. For example, the AMF sends an "N2 message" message to the RAN, where the message carries the first information and/or the second information.

For example, the SMF generates the second information (for example, a QoS parameter of a sub-PDU set) according to the PCC rule. Then, the SMF sends the second information to the RAN. The SMF may send a QoS profile (profile) to the RAN, and the QoS profile includes the second information.

Optionally, the SMF may further set (or update) a QoS parameter at a sub-PDU set granularity according to the PCC rule. For example, information such as PERs or PSERs of different sub-PDU sets in the same PDU set is set (or updated) according to the PCC rule. Then, the SMF sends the QoS parameter at the sub-PDU set granularity to the RAN.

H5: The SMF sends the first information and/or the second information to a UPF.

In step H5, the SMF sends the first information and/or the second information to the UPF in response to the "SM Policy Association Establishment" message. For example, the AMF sends an "N2 message" message to the UPF, where the message carries the first information and/or the second information.

For example, the SMF generates the second information (for example, a QoS parameter of a sub-PDU set and/or a data packet detection rule) according to the PCC rule. Then, the SMF sends the second information to the UPF.

H6: The UPF pads the data packet with the first information.

In step H6, for example, after determining, based on the second information, the sub-PDU set to which the data packet belongs, the UPF determines information about the sub-PDU set (that is, the first information in Manner B to Manner G in the foregoing step S1). Then, the UPF pads the data packet with the information about the sub-PDU set, for example, pads a GTP-U packet header of the data packet with the information.

H7: The UPF sends the data packet padded with the first information to the RAN.

In step H7, the UPF maps the data packet padded with the first information to a QoS flow for carrying the data packet, and sends the data packet padded with the first information to the RAN.

H8: The RAN determines a transmission mechanism and/or a retransmission mechanism of the data packet based on the first information and/or the second information.

In step H8, after the RAN determines, based on the first information and/or the second information, a DRB for carrying the data packet, the transmission mechanism and/or the retransmission mechanism of the data packet may be further determined. Then, the RAN sends the data packet to UE via the DRB based on the transmission mechanism and/or the retransmission mechanism.

Optionally, an access network device may determine, based on PDU set information of the data packet, a PDU set to which the data packet belongs. Then, the sub-PDU set to which the data packet belongs is determined based on the first information and/or the second information of the data packet.

Optionally, the access network device may determine, based on an indication of a network function or a network element of a core network, QoS flows in which data packets of a same PDU set are transmitted. For example, the access network device includes 10 QoS flows, and determines, based on the indication, that a plurality of data packets of a first PDU set are transmitted in a QoS flow #1, a QoS flow #3, and a QoS flow #5. Then, which data packets belong to the first PDU set and sub-PDU sets to which the data packets belonging to the first PDU set belong are detected from the QoS flow #1, the QoS flow #3, and the QoS flow #5.

H9: The RAN sends the data packet to the UE.

In step H9, the RAN sends the data packet to the UE via the DRB for carrying the data packet.

Optionally, the RAN determines a delay budget (delay budget) of the data packet based on a QoS parameter of the sub-PDU set to which the data packet belongs. Alternatively, the RAN determines a delay budget of the data packet based on importance information of the data packet (or importance information of the sub-PDU set to which the data packet belongs).

In an example, a same delay budget may be set for data packets included in a plurality of sub-PDU sets in a same PDU set, so that the plurality of data packets in the same PDU set arrive at the UE together.

Optionally, after determining importance of the data packet based on the first information and/or the second information, the RAN preferentially schedules a data packet with high importance in the plurality of data packets of the same PDU set. For example, a data packet with high importance is preferentially transmitted. For another example, a data packet with high importance is preferentially retransmitted.

Optionally, after determining the importance of the data packet based on the first information and/or the second information, the RAN uses differentiated channel coding for the plurality of data packets of the same PDU set based on the importance.

Optionally, after determining the importance of the data packet based on the first information and/or the second information, the RAN uses differentiated bit rates for transmission of the plurality of data packets of the same PDU set based on the importance.

Optionally, after determining the importance of the data packet based on the first information and/or the second information, the RAN uses differentiated retransmission mechanisms for the plurality of data packets of the same PDU set based on the importance. For example, an acknowledged mode (acknowledged mode, AM) is enabled for a data packet with high importance, and an unacknowledged mode (unacknowledged mode, UM) is enabled for a data packet with low importance.

In this embodiment of this application, the first information and/or the second information of the AF may be transmitted to the UPF and the RAN through another network function, thereby improving implementation flexibility of the method. In a process of transferring the first information and/or the second information between network functions, the PCF and the SMF may modify or add the first information and/or the second information based on an actual requirement, to satisfy service requirements of a plurality of services, improve data transmission quality, and improve user experience.

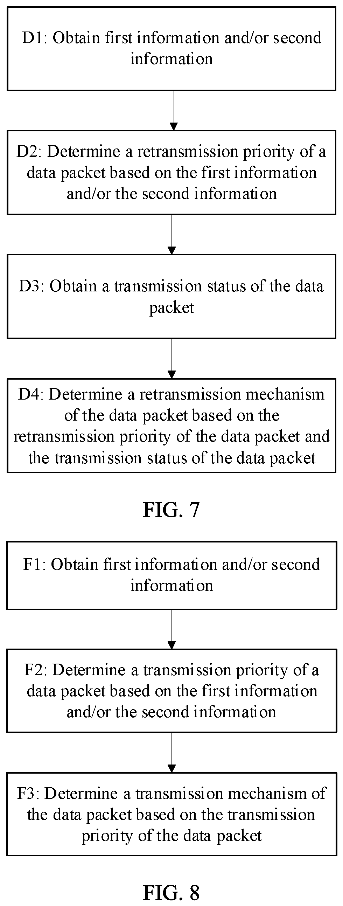

The following describes how the access network device determines the retransmission mechanism of the data packet based on the first information and/or the second information. With reference to the foregoing embodiments, refer to FIG. 7. FIG. 7 is a schematic flowchart of another embodiment of a protocol data unit set-based communication method according to an embodiment of this application. The protocol data unit set-based communication method provided in this embodiment of this application further includes the following.

D1: An access network device obtains first information and/or second information.

In step D1, the access network device may obtain the first information and/or the second information in a plurality of manners. For details, refer to the foregoing embodiments. Details are not described herein again.

In an example, the access network device may obtain the second information from an SMF, and the access network device obtains the first information from a received data packet.

D2: The access network device determines a retransmission priority of the data packet based on the first information and/or the second information.

In step D2, in a possible implementation, the access network device determines, based on importance information of the data packet, the retransmission priority corresponding to the importance information.

In another possible implementation, a QoS parameter corresponding to the data packet is determined from the second information. Then, the retransmission priority of the data packet is determined based on the QoS parameter corresponding to the data packet.

The retransmission priority indicates the priority of retransmitting the data packet by the access network device when the data packet encounters a packet loss. For example, when a data packet with a high retransmission priority encounters a packet loss, the access network device preferentially retransmits the data packet. For another example, when a data packet with a medium retransmission priority encounters a packet loss, the access network device retransmits the data packet with the medium retransmission priority after completing retransmission of a data packet with a high retransmission priority. For another example, when a data packet with a low retransmission priority encounters a packet loss, the access network device does not retransmit the data packet with the low retransmission priority.

D3: The access network device obtains a transmission status of the data packet.

In step D3, the access network device may obtain the transmission status of the data packet in a plurality of manners. For example, the access network device determines, by obtaining an acknowledgment (acknowledgment, ACK) or a negative acknowledgment (negative acknowledgment, NACK) of a terminal device for the data packet, whether the data packet is successfully transmitted. The transmission status of the data packet indicates that the data packet is successfully transmitted or the data packet fails to be transmitted.

It should be noted that a sequence of performing step D2 and step D3 is not limited in this embodiment of this application.

D4: The access network device determines a retransmission mechanism of the data packet based on the retransmission priority of the data packet and the transmission status of the data packet.

In step D4, after the access network device obtains the retransmission priority of the data packet and the transmission status of the data packet, the access network device determines a retransmission mechanism of data packets whose transmission statuses indicate a transmission failure. The retransmission mechanism may indicate which data packets in the same PDU set need to be retransmitted when a packet loss occurs, and which data packets do not need to be retransmitted when the packet loss occurs. The retransmission mechanism may further indicate a quantity of times of retransmitting specific data packets in the same PDU set when the packet loss occurs.

For example, for a plurality of data packets included in a first PDU set, the access network device first determines whether a received first data packet belongs to the first PDU set. After the first data packet belongs to the first PDU set, the access network device determines, based on the first information and/or the second information, a sub-PDU set to which the first data packet belongs. For example, the first data packet belongs to a first sub-PDU set in the first PDU set. It is determined, based on the first information and/or the second information, that a retransmission priority of the first sub-PDU set is high. In this case, when determining that the first data packet is lost, the access network device determines, based on the retransmission priority of the first sub-PDU set, that a retransmission mechanism of the first data packet is preferential retransmission.

It should be noted that, when the access network device retransmits a data packet on which a packet loss occurs in a same PDU set, a delay requirement indicated by a QoS parameter of the data packet needs to be satisfied. For example, within the delay requirement of the data packet, the data packet can be retransmitted only when a packet loss occurs on the data packet.

In this embodiment of this application, the access network device may further determine the retransmission priority of the data packet based on the first information and/or the second information. When the transmission status of the data packet indicates that a packet loss occurs on the data packet, whether the data packet is preferentially retransmitted is determined based on the retransmission priority of the data packet. Differentiated retransmission of different data packets in the same PDU set is implemented to satisfy service requirements of a plurality of services, improve data transmission quality, and improve user experience.

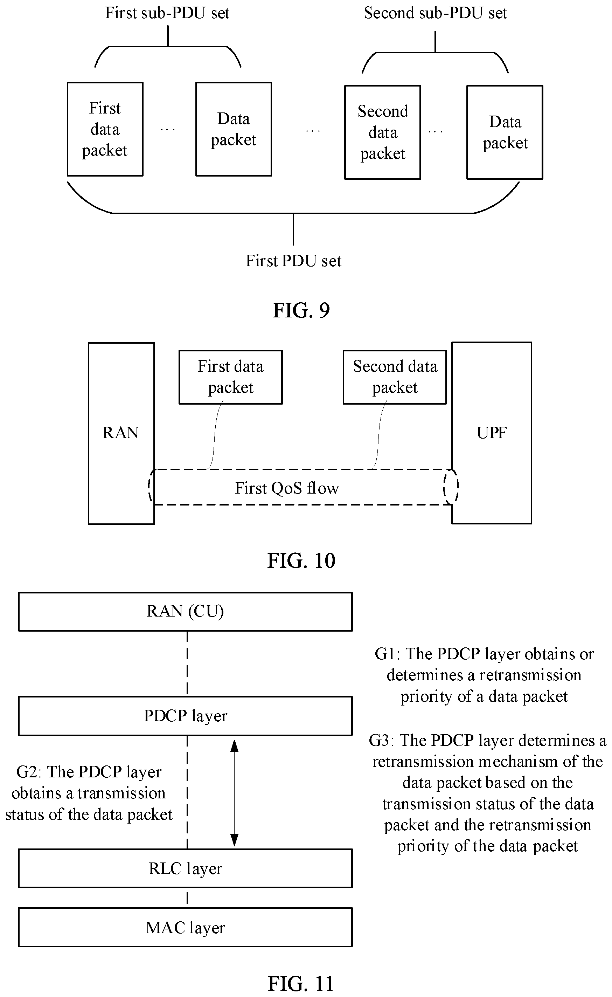

A plurality of data packets included in the PDU set may be transmitted in a same QoS flow, or may be transmitted in different QoS flows. Therefore, for different scenarios, the access network device may determine the retransmission mechanism of the data packet in different manners. With reference to the foregoing embodiments, the following separately provides descriptions. For ease of understanding, an example in which a first PDU set includes a plurality of data packets is used for description. Refer to FIG. 9. FIG. 9 is a diagram of a structure of a first PDU set according to an embodiment of this application. The first PDU set includes a plurality of data packets, the first PDU set includes a plurality of sub-PDU sets, and each sub-PDU set includes at least one data packet. For example, the first PDU set includes a first sub-PDU set and a second sub-PDU set, the first sub-PDU set includes a plurality of data packets such as a first data packet, and the second sub-PDU set includes a plurality of data packets such as a second data packet.

Scenario 1: A plurality of data packets included in a PDU set are transmitted in a same QoS flow, for example, as shown in FIG. 10. FIG. 10 is a diagram of data packet transmission according to an embodiment of this application. With reference to FIG. 9, both a first data packet included in a first sub-PDU set and a second data packet included in a second sub-PDU set in FIG. 10 are transmitted in a first QoS flow. Refer to FIG. 11. FIG. 11 is a schematic flowchart of another embodiment of a protocol data unit set-based communication method according to an embodiment of this application. The protocol data unit set-based communication method provided in this embodiment of this application further includes the following.

G1: A PDCP layer obtains or determines a retransmission priority of a data packet.

In step G1, the PDCP layer may obtain the retransmission priority of the data packet from a control plane (CU) of a RAN, and the control plane (CU) of the RAN determines the retransmission priority of the data packet based on first information and/or second information. Alternatively, the PDCP layer may determine the retransmission priority of the data packet based on first information and/or second information. This is not limited in this embodiment of this application.

G2: The PDCP layer obtains a transmission status of the data packet.

In step G2, in a possible implementation, the PDCP layer of the RAN receives a status report sent by a radio link control RLC layer of the RAN, where the status report includes the transmission status of the data packet.

In another possible implementation, the PDCP layer of the RAN subscribes to a data packet transmission situation of an RLC layer of the RAN. After the RLC layer of the RAN determines the transmission status of the data packet, the RLC layer of the RAN sends the transmission status of the data packet to the PDCP layer of the RAN. Correspondingly, the PDCP layer of the RAN receives the transmission status that is of the data packet and that is sent by the RLC layer of the RAN.

It should be noted that a sequence of performing step G2 and step G1 is not limited in this embodiment of this application.

G3: The PDCP layer determines a retransmission mechanism of the data packet based on the transmission status of the data packet and the retransmission priority of the data packet.

Step G3 is similar to step D4, and details are not described herein again.

In another possible implementation, the PDCP layer first obtains the transmission status of the data packet. After determining data packets on which a packet loss occurs, the PDCP layer further obtains first information and/or second information of these data packets on which the packet loss occurs. Then, retransmission priorities of these data packets on which the packet loss occurs are determined. For example, a corresponding retransmission priority is determined based on importance information of the data packet on which the packet loss occurs, or after a sub-PDU set to which the data packet on which the packet loss occurs belongs is determined, a corresponding retransmission priority is determined based on the sub-PDU set. In other words, step G2 is first performed, step G1 is then performed, and step G3 is finally performed.

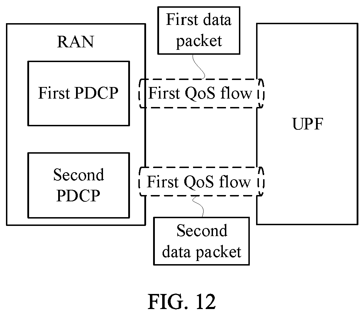

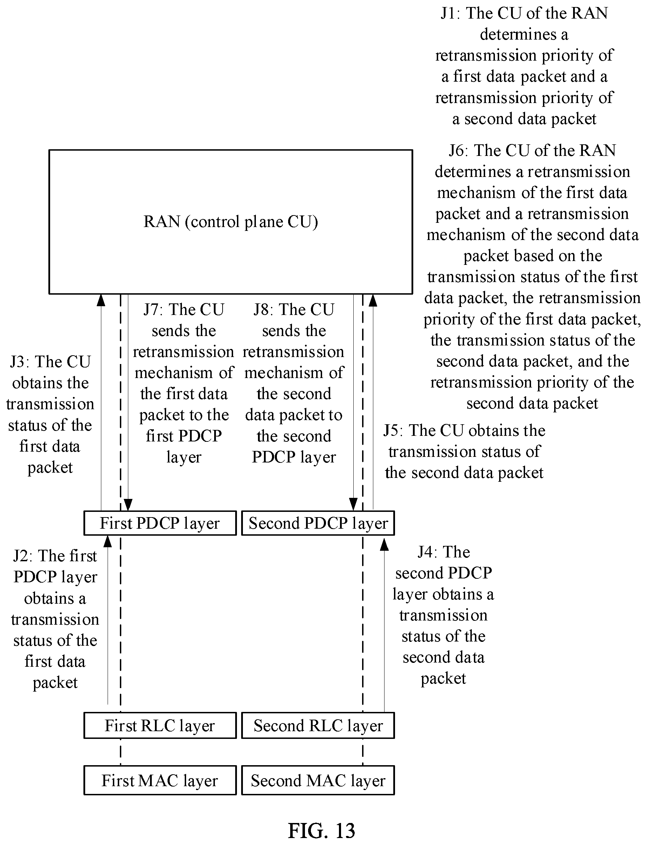

Scenario 2: A plurality of data packets included in a PDU set are transmitted in a same QoS flow, for example, as shown in FIG. 12. FIG. 12 is another diagram of data packet transmission according to an embodiment of this application. With reference to FIG. 9, in FIG. 12, a first data packet included in a first sub-PDU set is transmitted in a first QoS flow, and a second data packet included in a second sub-PDU set is transmitted in a second QoS flow. Each QoS flow corresponds to a group of independent entities, and the entities include a PDCP layer, an RLC layer, a MAC layer, and the like. Refer to FIG. 13. FIG. 13 is a schematic flowchart of another embodiment of a protocol data unit set-based communication method according to an embodiment of this application. The protocol data unit set-based communication method provided in this embodiment of this application further includes the following.

J1: A CU of a RAN determines a retransmission priority of a first data packet and a retransmission priority of a second data packet.

In step J1, the CU of the RAN determines the retransmission priority of the first data packet based on first information and/or second information of the first data packet. The CU of the RAN determines the retransmission priority of the second data packet based on first information and/or second information of the second data packet.

J2: A first PDCP layer of the RAN obtains a transmission status of the first data packet.

In step J2, in a possible implementation, the first PDCP layer of the RAN receives a status report sent by a first radio link control RLC layer of the RAN, where the status report includes the transmission status of the data packet.

In another possible implementation, the first PDCP layer of the RAN subscribes to a data packet transmission situation of a first RLC layer of the RAN. After the first RLC layer of the RAN determines the transmission status of the data packet, the first RLC layer of the RAN sends the transmission status of the data packet to the first PDCP layer of the RAN. Correspondingly, the first PDCP layer of the RAN receives the transmission status that is of the data packet and that is sent by the first RLC layer of the RAN.

J3: The CU of the RAN obtains the transmission status of the first data packet.

In step J3, in a possible implementation, the CU of the RAN receives a status report sent by the first PDCP layer of the RAN, where the status report includes the transmission status of the first data packet.

In another possible implementation, the CU of the RAN subscribes to a data packet transmission situation of the first PDCP layer of the RAN. The CU of the RAN receives the transmission status that is of the first data packet and that is sent by the first PDCP layer of the RAN.

J4: A second PDCP layer of the RAN obtains a transmission status of the second data packet.

J5: The CU of the RAN obtains the transmission status of the second data packet.

Step J4 and step J5 are similar to step J2 and step J3, and details are not described herein again.

J6: The CU of the RAN determines a retransmission mechanism of the first data packet and a retransmission mechanism of the second data packet based on the transmission status of the first data packet, the retransmission priority of the first data packet, the transmission status of the second data packet, and the retransmission priority of the second data packet.

In step J6, after the CU of the RAN obtains transmission statuses and retransmission priorities of different data packets of a same PDU set from different PDCP entities, the CU of the RAN comprehensively considers a retransmission mechanism of each of a plurality of data packets of the same PDU set.

In a possible implementation, the CU of the RAN determines a data packet with a highest retransmission priority in the plurality of data packets of the same PDU set, and then preferentially retransmits a data packet with a highest retransmission priority on which a packet loss occurs. The CU of the RAN determines a data packet with a second highest retransmission priority in the plurality of data packets of the same PDU set, and then after the data packet with the highest retransmission priority is retransmitted, retransmits a data packet with a second highest retransmission priority on which a packet loss occurs. The CU of the RAN determines a data packet with a lowest retransmission priority in the plurality of data packets of the same PDU set, and then does not retransmit a data packet with a lowest retransmission priority on which a packet loss occurs.

After determining the retransmission mechanism of each of the plurality of data packets of the same PDU set, the CU of the RAN sends the retransmission mechanism of the data packet to a PDCP layer corresponding to each data packet.

J7: The CU of the RAN sends the retransmission mechanism of the first data packet to the first PDCP layer of the RAN.

J8: The CU of the RAN sends the retransmission mechanism of the second data packet to the second PDCP layer of the RAN.

In this embodiment of this application, the access network device may further determine the retransmission priority of the data packet based on the first information and/or the second information. When the transmission status of the data packet indicates that a packet loss occurs on the data packet, whether the data packet is preferentially retransmitted is determined based on the retransmission priority of the data packet. The CU in the access network device obtains transmission statuses of data packets through different PDCP entities corresponding to different sub-PDU sets. The CU comprehensively considers retransmission mechanisms of the data packets based on transmission statuses and retransmission priorities of data packets in different sub-PDU sets of a same PDU set, so as to set different retransmission mechanisms for data packets with different importance. Differentiated retransmission of different data packets in the same PDU set is implemented to satisfy service requirements of a plurality of services, improve data transmission quality, and improve user experience.

Optionally, in this embodiment of this application, the access network device may further determine a transmission mechanism of the data packet based on the first information and/or the second information. With reference to the foregoing embodiments, refer to FIG. 8. FIG. 8 is a schematic flowchart of another embodiment of a protocol data unit set-based communication method according to an embodiment of this application. The protocol data unit set-based communication method provided in this embodiment of this application further includes the following.

F1: An access network device obtains first information and/or second information.

F2: The access network device determines a transmission priority of a data packet based on the first information and/or the second information.

Optionally, the access network device determines a transmission mechanism of the data packet based on the first information and/or the second information. The retransmission mechanism may indicate which data packets in the same PDU set are preferentially transmitted.

F3: The access network device determines the transmission mechanism of the data packet based on the transmission priority of the data packet.

In this embodiment of this application, the access network device may further determine the transmission priority of the data packet based on the first information and/or the second information. A transmission sequence of different data packets in a same PDU set carried in a same QoS flow is determined based on transmission priorities of the data packets. Different transmission mechanisms are set for data packets with different importance. Differentiated transmission of different data packets in the same PDU set is implemented to satisfy service requirements of a plurality of services, improve data transmission quality, and improve user experience.

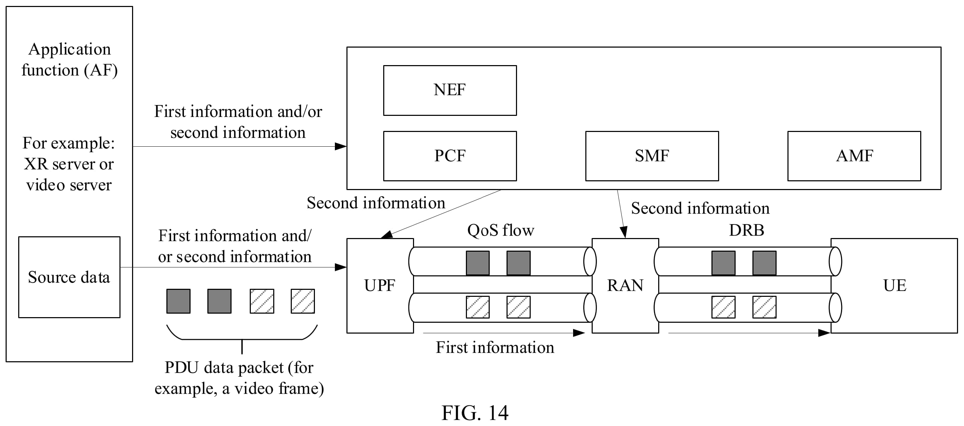

A possible application scenario is shown in FIG. 14. An AF allocates, based on a service requirement, first information and/or second information to a PDU set corresponding to a service. For example, in a 3D video service, geometric data in a 3D media frame has a high QoS requirement, and attribute data in the 3D media frame has a low QoS requirement. Therefore, the AF may allocate first information and/or second information to different sub-PDU sets in a PDU set that carries the 3D media frame. For example, the AF allocates importance information with high importance to a data packet of a sub-PDU set #1 that carries geometric data in the PDU set, and the AF allocates importance information with low importance to a data packet of a sub-PDU set #2 that carries attribute data in the PDU set. Each sub-PDU set includes one or more data packets, and each sub-PDU set carries a part of data of one 3D media frame.

The AF sends the first information and/or the second information to another network function (including but not limited to an NEF, a PCF, an SMF, or an AMF). The AF may also send the first information and/or the second information to a UPF along with a flow (a data flow of the PDU set). For example, the UPF obtains the first information along with the flow and obtains the second information from another network function. The UPF determines, based on first information (for example, importance information) and/or second information of each data packet, a QoS flow for carrying the data packet. In this way, a plurality of data packets of a same PDU set are transmitted in different QoS flows in a splitting manner. For example, in FIG. 14, a QoS flow for carrying a data packet of a sub-PDU set #1 and a QoS flow for carrying a data packet of a sub-PDU set #2 are independent of each other. A RAN obtains the first information along with the flow and obtains the second information from another network function. The RAN determines, based on first information (for example, importance information) and/or second information of each data packet, a DRB for carrying the data packet. Optionally, the RAN may further determine a retransmission mechanism and/or a transmission mechanism of each data packet based on first information (for example, importance information) and/or second information of the data packet. According to the foregoing method, differentiated QoS requirements of a 3D video service on intra-frame data are satisfied, data transmission quality is improved, and user experience is enhanced.

It should be noted that the method provided in embodiments of this application may be further applied to another application scenario in which intra-frame differentiated QoS handling needs to be implemented. For example, in a lidar scenario, for a same point cloud data frame of a lidar, importance information with high importance may be allocated to geometric data in the point cloud data frame, and importance information with low importance may be allocated to attribute data in the point cloud data frame. Differentiated QoS requirements of different subframes in a point cloud data frame are satisfied.

The foregoing describes this application from a perspective of the method, and the following further describes other embodiments provided in this application.

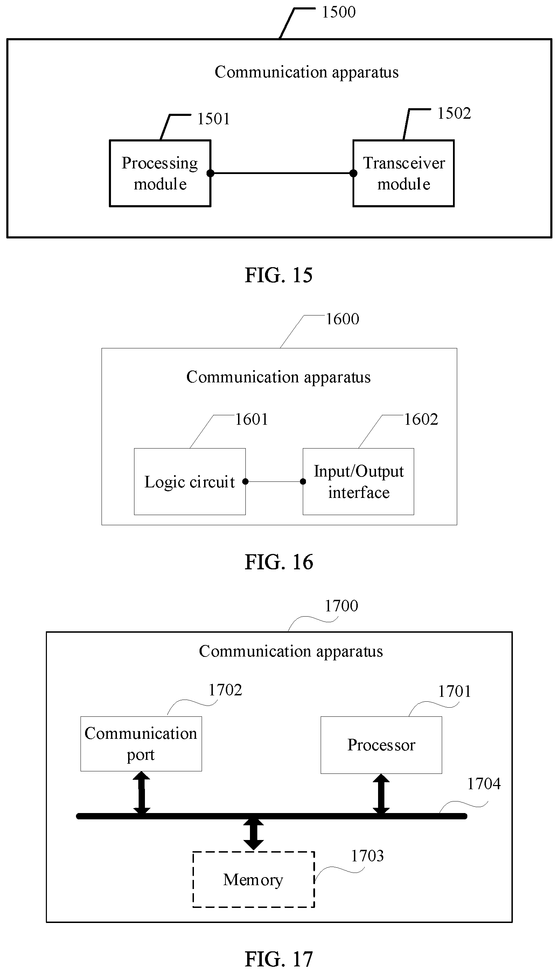

FIG. 15 is a diagram of an implementation of a communication apparatus according to this application. The communication apparatus 1500 includes a processing module 1501 and a transceiver module 1502. The communication apparatus 1500 may implement functions of the communication apparatus (including the AF, the UPF, the SMF, the PCF, the RAN, and/or the like) in the foregoing method embodiments, and therefore can also achieve the beneficial effects of the foregoing method embodiments. In this embodiment of this application, the communication apparatus 1500 may be the AF, the UPF, the SMF, the PCF, and/or the RAN, or may be an integrated circuit or an element, for example, a chip, in the AF, the UPF, the SMF, the PCF, and/or the RAN, or may be an integrated circuit or an element integrating the AF, the UPF, the SMF, the PCF, and/or the RAN.

FIG. 16 is another diagram of a structure of a communication apparatus 1600 according to this application. The communication apparatus 1600 includes at least an input/output interface 1602. The communication apparatus 1600 may be a chip or an integrated circuit.

Optionally, the communication apparatus further includes a logic circuit 1601.

The transceiver module 1502 shown in FIG. 15 may be a communication interface. The communication interface may be the input/output interface 1602 in FIG. 16. The input/output interface 1602 may include an input interface and an output interface. Alternatively, the communication interface may be a transceiver circuit, and the transceiver circuit may include an input interface circuit and an output interface circuit.

Optionally, when the communication apparatus 1600 is the AF, the UPF, the SMF, the PCF, and/or the RAN in the foregoing embodiments, the input/output interface 1602 is configured to input and output information, and the logic circuit 1601 is configured to perform the method performed by the AF, the UPF, the SMF, the PCF, and/or the RAN in the foregoing embodiments.

The logic circuit 1601 and the input/output interface 1602 may further perform other steps performed by the communication apparatus in any embodiment and achieve corresponding beneficial effects. Details are not described herein.

In a possible implementation, the processing module 1501 shown in FIG. 15 may be the logic circuit 1601 in FIG. 16.

Optionally, the logic circuit 1601 may be a processing apparatus, and some or all functions of the processing apparatus may be implemented by using software. Some or all functions of the processing apparatus may be implemented by using software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate array, FPGA), application-specific integrated circuits (application-specific integrated circuit, ASIC), system on chips (system on chip, SoC), central processing units (central processing unit, CPU), network processors (network processor, NP), digital signal processors (digital signal processor, DSP), microcontroller units (microcontroller unit, MCU), programmable logic devices (programmable logic device, PLD), or other integrated chips, or any combination of the foregoing chips or processors.

FIG. 17 shows a communication apparatus 1700 in the foregoing embodiments according to an embodiment of this application. The communication apparatus 1700 may be specifically the communication apparatus used as the AF, the UPF, the SMF, the PCF, and/or the RAN in the foregoing embodiments.

In a diagram of a possible logical structure of the communication apparatus 1700, the communication apparatus 1700 may include but is not limited to at least one processor 1701 and a communication port 1702.

Further, optionally, the apparatus may further include at least one of a memory 1703 and a bus 1704. In this embodiment of this application, the at least one processor 1701 is configured to control and process an action of the communication apparatus 1700.

In addition, the processor 1701 may be a central processing unit, a general-purpose processor, a digital signal processor, an application-specific integrated circuit, a field-programmable gate array or another programmable logic device, a transistor logic device, a hardware component, or any combination thereof. The processor may implement or execute logical blocks, modules, and circuits in various examples described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing described system, apparatus, and unit, refer to a corresponding process in the foregoing method embodiment. Details are not described herein again.

It should be noted that the communication apparatus 1700 shown in FIG. 17 may be specifically configured to: implement the steps implemented by the AF, the UPF, the SMF, the PCF, and/or the RAN in the foregoing method embodiments, and achieve technical effects corresponding to the AF, the UPF, the SMF, the PCF, and/or the RAN. For a specific implementation of the communication apparatus shown in FIG. 17, refer to the descriptions in the foregoing method embodiments. Details are not described herein again.

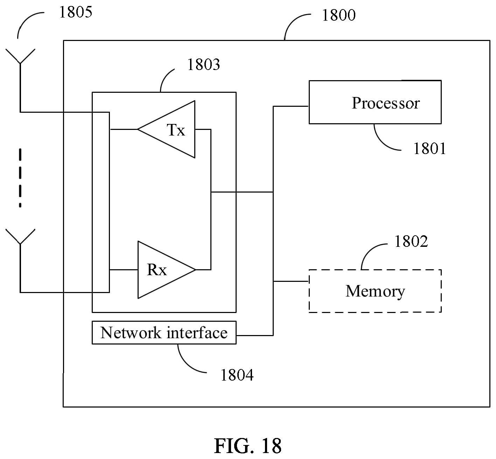

FIG. 18 is a diagram of a structure of a communication apparatus 1800 in the foregoing embodiments according to an embodiment of this application. The communication apparatus 1800 may be specifically the communication apparatus used as the AF, the UPF, the SMF, the PCF, and/or the RAN in the foregoing embodiments. For a structure of the communication apparatus, refer to the structure shown in FIG. 18.

The communication apparatus 1800 includes at least one processor 1801 and at least one network interface 1804. Further, optionally, the communication apparatus further includes at least one memory 1802, at least one transceiver 1803, and one or more antennas 1805. The processor 1801, the memory 1802, the transceiver 1803, and the network interface 1804 are connected, for example, by using a bus. In this embodiment of this application, the connection may include various interfaces, transmission lines, buses, or the like. This is not limited in this embodiment. The antenna 1805 is connected to the transceiver 1803. The network interface 1804 is configured to enable the communication apparatus to communicate with another communication device through a communication link. For example, the network interface 1804 may include a network interface between the communication apparatus and a core network device, for example, an S1 interface. The network interface may include a network interface between the communication apparatus and another communication apparatus (for example, another radio access network or core network device), for example, an X2 or Xn interface.

The processor 1801 is mainly configured to: process a communication protocol and communication data, control the entire communication apparatus, execute a software program, and process data of the software program, for example, configured to support the communication apparatus in performing an action described in the embodiments. The communication apparatus may include a baseband processor and a central processing unit. The baseband processor is mainly configured to process the communication protocol and the communication data. The central processing unit is mainly configured to control the entire terminal device, execute the software program, and process the data of the software program. The processor 1801 in FIG. 18 may integrate functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1802 may exist independently, and is connected to the processor 1801. Optionally, the memory 1802 and the processor 1801 may be integrated together, for example, integrated into one chip. The memory 1802 can store program code for performing the technical solutions in embodiments of this application, and execution is controlled by the processor 1801. Various types of executed computer program code may also be considered as a driver of the processor 1801.

FIG. 18 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1803 may be configured to support receiving or sending of a radio frequency signal between the communication apparatus and a terminal, and the transceiver 1803 may be connected to the antenna 1805. The transceiver 1803 includes a transmitter Tx and a receiver Rx. Specifically, the one or more antennas 1805 may receive a radio frequency signal, and the receiver Rx of the transceiver 1803 is configured to receive the radio frequency signal from the antenna, convert the radio frequency signal into a digital baseband signal or a digital medium-frequency signal, and provide the digital baseband signal or the digital medium-frequency signal to the processor 1801, so that the processor 1801 performs further processing, for example, demodulation processing and decoding processing, on the digital baseband signal or the digital medium-frequency signal. In addition, the transmitter Tx in the transceiver 1803 is further configured to receive a modulated digital baseband signal or digital medium-frequency signal from the processor 1801, convert the modulated digital baseband signal or digital medium-frequency signal into a radio frequency signal, and send the radio frequency signal by using the one or more antennas 1805. Specifically, the receiver Rx may selectively perform one or more levels of downmixing processing and analog-to-digital conversion processing on the radio frequency signal to obtain the digital baseband signal or the digital medium-frequency signal. A sequence of the downmixing processing and the analog-to-digital conversion processing is adjustable. The transmitter Tx may selectively perform one or more levels of up-mixing processing and digital-to-analog conversion processing on the modulated digital baseband signal or digital medium-frequency signal to obtain the radio frequency signal. A sequence of the up-mixing processing and the digital-to-analog conversion processing is adjustable. The digital baseband signal and the digital medium-frequency signal may be collectively referred to as a digital signal.

The transceiver 1803 may also be referred to as a transceiver module, a transceiver machine, a transceiver apparatus, or the like. Optionally, a component configured to implement a receiving function in the transceiver module may be considered as a receiving unit, and a component configured to implement a sending function in the transceiver module may be considered as a sending unit. In other words, the transceiver module includes a receiving unit and a sending unit. The receiving unit may also be referred to as a receiver, an input port, a receiving circuit, or the like. The sending unit may be referred to as a transmitter machine, a transmitter, a transmission circuit, or the like.

It should be noted that the communication apparatus 1800 shown in FIG. 18 may be specifically configured to: implement the steps implemented by the AF, the UPF, the SMF, the PCF, and/or the RAN in the foregoing method embodiments, and achieve technical effects corresponding to the AF, the UPF, the SMF, the PCF, and/or the RAN. For a specific implementation of the communication apparatus 1800 shown in FIG. 18, refer to the descriptions in the foregoing method embodiments. Details are not described herein again.

An embodiment of this application further provides a computer-readable storage medium that stores one or more computer-executable instructions. When the computer-executable instructions are executed by a processor, the processor performs the method in the possible implementations of the AF, the UPF, the SMF, the PCF, and/or the RAN in the foregoing embodiments.

An embodiment of this application further provides a computer program product (or referred to as a computer program) stored in one or more computers. When the computer program product is executed by a processor, the processor performs the method in the possible implementations of the foregoing AF, UPF, SMF, PCF, and/or RAN.

An embodiment of this application further provides a chip system. The chip system includes at least one processor configured to support a communication apparatus in implementing the functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the AF, the UPF, the SMF, the PCF, and/or the RAN in the foregoing method embodiments.

An embodiment of this application further provides a communication system. The communication system includes the AF, the UPF, the SMF, the PCF, and/or the RAN in any one of the foregoing embodiments.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing module, or each of the units may exist alone physically, or two or more units are integrated into one unit. The integrated unit may be implemented in a form of hardware, or may be implemented in a form of a software functional unit. When the integrated unit is implemented in a form of a software functional unit and sold or used as an independent product, the integrated unit may be stored in a computer-readable storage medium. Based on such an understanding, the technical solutions of this application essentially, or the contributing part, or all or some of the technical solutions may be implemented in a form of a software product. The computer software product is stored in a storage medium and includes several instructions for instructing a computer device (which may be a personal computer, a server, a radio access network, or the like) to perform all or some of the steps of the methods described in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A protocol data unit set-based communication method, wherein the method is applied to an application function AF, and the method comprises:
sending first information, wherein the first information indicates that a plurality of data packets belonging to a same protocol data unit set PDU set are transmitted in at least two quality of service QoS flows; and
sending the plurality of data packets belonging to the same PDU set, wherein the plurality of data packets belonging to the same PDU set are transmitted via the at least two QoS flows.

2. The method according to claim 1, wherein the first information comprises importance information of each of the plurality of data packets belonging to the same PDU set, and importance information of all of the plurality of data packets belonging to the same PDU set is in one-to-one correspondence with different QoS flows for carrying the data packets belonging to the same PDU set.

3. The method according to claim 2, wherein each of the plurality of data packets belonging to the same PDU set carries the importance information of the data packet.

4. The method according to claim 2 or 3, wherein the importance information of the data packet is represented by a coding scheme of the data packet, or the importance information of the data packet is represented by a data type of the data packet.

5. The method according to any one of claims 1 to 4, wherein the plurality of data packets belonging to the same PDU set belong to different sub-PDU sets, the first information further comprises an identity of a sub-PDU set to which each of the plurality of data packets belonging to the same PDU set belongs, and each sub-PDU set comprises at least one data packet.

6. The method according to any one of claims 1 to 5, wherein the first information comprises an association relationship between sub-PDU sets to which the data packets belonging to the same PDU set belong and QoS flows for carrying the sub-PDU sets.

7. The method according to any one of claims 1 to 6, wherein sending, by the application function, the first information comprises:
sending, by the application function, the data packets belonging to the same PDU set, wherein the data packet carries the first information.

8. The method according to any one of claims 1 to 7, wherein the first information comprises at least one of the following information:
a start packet identifier of a sub-PDU set, wherein the start packet identifier of the sub-PDU set indicates a 1^{st} data packet in a plurality of data packets comprised in the sub-PDU set;
an end packet identifier of the sub-PDU set, wherein the end packet identifier of the sub-PDU set indicates a last data packet in the plurality of data packets comprised in the sub-PDU set;
a quantity of data packet bits of the sub-PDU set, wherein the quantity of data packet bits of the sub-PDU set indicates a size of the data packet comprised in the sub-PDU set; or
a data packet sequence number of the sub-PDU set, wherein the data packet sequence number of the sub-PDU set indicates a sequence number, in the sub-PDU set, of the data packet comprised in the sub-PDU set.

9. The method according to any one of claims 1 to 8, wherein the method further comprises:
sending, by the application function, second information, wherein the second information indicates a splitting transmission mechanism of the plurality of data packets belonging to the same PDU set; and
the second information comprises at least one of the following information:
an association relationship between the importance information of the data packets belonging to the same PDU set and QoS flows;
an association relationship between the importance information of the data packets belonging to the same PDU set and QoS requirements;
an association relationship between the importance information of the data packets belonging to the same PDU set and QoS parameters;
splitting transmission indication information, wherein the splitting transmission indication information indicates to map, based on the first information, the plurality of data packets belonging to the same PDU set to a plurality of QoS flows for transmission;
a data packet detection rule for a plurality of sub-PDU sets belonging to the same PDU set;
a QoS parameter of each of the plurality of sub-PDU sets belonging to the same PDU set, wherein the QoS parameter of each sub-PDU set corresponds to a parameter of a QoS flow for carrying the sub-PDU set; or
QoS requirements of the plurality of sub-PDU sets belonging to the same PDU set, wherein a QoS requirement of each sub-PDU set indicates information about a requirement for a QoS flow for carrying a data packet of the sub-PDU set.

10. The method according to claim 9, wherein the QoS parameter of the sub-PDU set comprises any one or more of the following:
a sub-PDU set delay budget a sub-PDU set error rate, or sub-PDU set integrated handling information.

11. A protocol data unit set-based communication method, wherein the method is applied to a user plane function UPF, and the method comprises:
receiving a plurality of data packets belonging to a same protocol data unit PDU set; and
determining, based on first information and/or second information, a QoS flow for carrying the data packet, wherein the first information indicates that the plurality of data packets belonging to the same PDU set are transmitted in at least two quality of service QoS flows, and the second information indicates a splitting transmission mechanism of the plurality of data packets belonging to the same PDU set.

12. The method according to claim 11, wherein
the first information comprises importance information of each of the plurality of data packets belonging to the same PDU set, and importance information of all of the plurality of data packets belonging to the same PDU set is in one-to-one correspondence with different QoS flows for carrying the data packets belonging to the same PDU set;
the second information comprises an association relationship between the importance information of the data packet and the QoS flow; and
determining, based on the first information and/or the second information, the QoS flow for carrying the data packet comprises:
determining, based on the importance information of each of the plurality of data packets belonging to the same PDU set and/or the association relationship between the importance information of the data packet and the QoS flow, the QoS flow associated with the importance information of the data packet, wherein the QoS flow is used to carry the data packet.

13. The method according to claim 11, wherein determining, based on the first information and/or the second information, the QoS flow for carrying the data packet comprises:
determining, based on the first information and/or the second information, a sub-PDU set to which the data packet belongs, wherein the plurality of data packets belonging to the same PDU set belong to different sub-PDU sets, and each sub-PDU set comprises at least one data packet; and
determining, based on the sub-PDU set to which the data packet belongs, a QoS flow corresponding to the sub-PDU set, wherein the QoS flow is used to carry the data packet.

14. The method according to claim 13, wherein
the second information comprises a data packet detection rule for the plurality of sub-PDU sets belonging to the same PDU set; and
determining, based on the first information and/or the second information, the sub-PDU set to which the data packet belonging to the same PDU set belongs comprises:
performing detection on data of the data packet according to the data packet detection rule for the plurality of sub-PDU sets belonging to the same PDU set, to determine the sub-PDU set to which the data packet belongs.

15. The method according to claim 11, wherein
the first information comprises an association relationship between sub-PDU sets to which the data packets belonging to the same PDU set belong and quality of service QoS flows for carrying the sub-PDU sets; and
determining, based on the first information and/or the second information, the QoS flow for carrying the data packet comprises:
determining, based on the association relationship between the sub-PDU sets to which the data packets belong and the QoS flows for carrying the sub-PDU sets, the QoS flow corresponding to the data packet, wherein the QoS flow is used to carry the data packet.

16. The method according to any one of claims 11 to 15, wherein the method further comprises:
obtaining, based on the data packet and the first information, a data packet comprising the first information; and
mapping the data packet comprising the first information to the QoS flow for transmission.

17. The method according to any one of claims 11 to 16, wherein the first information comprises any one or more of the following information:
importance information of the data packets belonging to the same PDU set;
identities of the sub-PDU sets to which the data packets belonging to the same PDU set belong;
an association relationship between the sub-PDU sets to which the data packets belonging to the same PDU set belong and QoS flows for transmitting the sub-PDU sets;
a start packet identifier of the sub-PDU set, wherein the start packet identifier of the sub-PDU set indicates a 1^{st} data packet in a plurality of data packets comprised in the sub-PDU set;
an end packet identifier of the sub-PDU set, wherein the end packet identifier of the sub-PDU set indicates a last data packet in the plurality of data packets comprised in the sub-PDU set;
a quantity of data packet bits of the sub-PDU set, wherein the quantity of data packet bits of the sub-PDU set indicates a size of the data packet comprised in the sub-PDU set; or
a data packet sequence number of the sub-PDU set, wherein the data packet sequence number of the sub-PDU set indicates a sequence number, in the sub-PDU set, of the data packet comprised in the sub-PDU set.

18. The method according to any one of claims 11 to 17, wherein the second information comprises at least one of the following:
an association relationship between the importance information of the data packets belonging to the same PDU set and QoS flows;
splitting transmission indication information, wherein the splitting transmission indication information indicates to map, based on the first information, the data packets belonging to the same PDU set to a plurality of QoS flows for transmission; or
the data packet detection rule for the plurality of sub-PDU sets belonging to the same PDU set.

19. A protocol data unit set-based communication method, wherein the method is applied to an access network device RAN, and the method comprises:
receiving a plurality of data packets belonging to a same protocol data unit PDU set;
determining, based on first information and/or second information, a data radio bearer DRB for carrying the data packet, wherein the first information indicates that the plurality of data packets belonging to the same PDU set are transmitted in at least two quality of service QoS flows, and the second information indicates a splitting transmission mechanism of the plurality of data packets belonging to the same PDU set; and
mapping the data packet to the determined DRB for carrying the data packet.

20. The method according to claim 19, wherein determining, based on the first information and/or the second information, the data radio bearer DRB for carrying the data packet comprises:
determining, based on the first information and/or the second information, a sub-PDU set to which the data packet belongs, wherein the plurality of data packets belonging to the same PDU set belong to different sub-PDU sets, and each sub-PDU set comprises at least one data packet; and
determining, based on the sub-PDU set to which the data packet belongs, the DRB corresponding to the sub-PDU set, wherein the DRB is used to carry the data packet.

21. The method according to claim 19 or 20, wherein the method further comprises:
determining a retransmission mechanism of the data packet based on the first information and/or the second information.

22. The method according to any one of claims 19 to 21, wherein determining the retransmission mechanism of the data packet comprises:
determining a retransmission priority of the data packet based on the first information and/or the second information, wherein the retransmission priority indicates a priority of retransmitting the data packet by the access network device when the data packet encounters a packet loss; and
determining the retransmission mechanism of the data packet based on the retransmission priority of the data packet.

23. The method according to any one of claims 19 to 22, wherein the method further comprises:
determining a transmission priority of the data packet based on the first information and/or the second information, wherein the transmission priority indicates a priority of transmitting the data packet by the access network device; and
determining a transmission mechanism of the data packet based on the transmission priority of the data packet.

24. The method according to any one of claims 19 to 23, wherein the first information comprises any one or more of the following information:
importance information of the data packets belonging to the same PDU set, wherein the importance information of the data packets indicates QoS flows for carrying the data packets belonging to the same PDU set;
identities of the sub-PDU sets to which the data packets belonging to the same PDU set belong;
an association relationship between the sub-PDU sets to which the data packets belonging to the same PDU set belong and QoS flows for transmitting the sub-PDU sets;
a start packet identifier of the sub-PDU set, wherein the start packet identifier of the sub-PDU set indicates a 1^{st} data packet in a plurality of data packets comprised in the sub-PDU set;
an end packet identifier of the sub-PDU set, wherein the end packet identifier of the sub-PDU set indicates a last data packet in the plurality of data packets comprised in the sub-PDU set;
a quantity of data packet bits of the sub-PDU set, wherein the quantity of data packet bits of the sub-PDU set indicates a size of the data packet comprised in the sub-PDU set; or
a data packet sequence number of the sub-PDU set, wherein the data packet sequence number of the sub-PDU set indicates a sequence number, in the sub-PDU set, of the data packet comprised in the sub-PDU set.

25. The method according to any one of claims 19 to 24, wherein the second information comprises at least one of the following:
an association relationship between the importance information of the data packets belonging to the same PDU set and QoS flows;
an association relationship between the importance information of the data packets belonging to the same PDU set and QoS requirements;
an association relationship between the importance information of the data packets belonging to the same PDU set and QoS parameters;
splitting transmission indication information, wherein the splitting transmission indication information indicates to map, based on the first information, the data packets belonging to the same PDU set to a plurality of QoS flows for transmission;
a data packet detection rule for the plurality of sub-PDU sets belonging to the same PDU set;
a QoS parameter of each of the plurality of sub-PDU sets belonging to the same PDU set, wherein the QoS parameter of each sub-PDU set corresponds to a parameter of a QoS flow for carrying the sub-PDU set; or
QoS requirements of the plurality of sub-PDU sets belonging to the same PDU set, wherein a QoS requirement of each sub-PDU set indicates information about a requirement for a QoS flow for carrying a data packet of the sub-PDU set.

26. A communication apparatus, comprising a transceiver module and a processing module, wherein
the transceiver module is configured to input and/or output signaling or data; and
the processing module is configured to perform, through a communication unit, the method according to any one of claims 1 to 10, the method according to any one of claims 11 to 18, or the method according to any one of claims 19 to 25.

27. A communication apparatus, comprising a communication interface and a processor, wherein
the communication interface is configured to input and/or output signaling or data; and
the processor is configured to execute a computer-executable program, to perform the method according to any one of claims 1 to 10, the method according to any one of claims 11 to 18, or the method according to any one of claims 19 to 25.

28. A communication apparatus, comprising a processor and a memory, wherein
the memory is configured to store a computer program or instructions; and
the processor is configured to execute the computer program or the instructions in the memory, to perform the method according to any one of claims 1 to 10, the method according to any one of claims 11 to 18, or the method according to any one of claims 19 to 25.

29. A computer-readable storage medium, comprising instructions, wherein when the instructions are executed by a processor, the method according to any one of claims 1 to 10, claims 11 to 18, or claims 19 to 25 is implemented.

30. A computer program product, comprising a program, wherein when the program is executed by a processor, the method according to any one of claims 1 to 10, claims 11 to 18, or claims 19 to 25 is implemented.

31. A chip system, wherein the chip system comprises at least one processor, and when program instructions are executed by the at least one processor, the method according to any one of claims 1 to 10, claims 11 to 18, or claims 19 to 25 is implemented.

32. A communication system, comprising a communication apparatus configured to perform the method according to any one of claims 1 to 10, a communication apparatus configured to perform the method according to any one of claims 11 to 18, and a communication apparatus configured to perform the method according to any one of claims 19 to 25.

33. A protocol data unit set-based communication method, wherein the method is applied to a communication system, the communication system comprises an application function and a user plane function, and the method comprises:
sending, by the application function, first information, wherein the first information indicates that a plurality of data packets belonging to a same protocol data unit set PDU set are transmitted in at least two quality of service QoS flows;
sending, by the application function, the plurality of data packets belonging to the same PDU set;
receiving, by the user plane function, the plurality of data packets belonging to the same PDU set; and
determining, by the user plane function based on the first information and/or second information, a QoS flow for carrying the data packet.

34. The method according to claim 33, wherein the communication system further comprises an access network device, and the method further comprises:
receiving, by the access network device, the plurality of data packets belonging to the same protocol data unit set PDU set;
determining, by the access network device based on the first information and/or the second information, a data radio bearer DRB for carrying the data packet; and
mapping, by the access network device, the data packet to the determined DRB for carrying the data packet.
